# EUROPEAN PATENT APPLICATION

(11) **EP 3 629 091 A1**
(43) Date of publication of application: **01.04.2020**
(21) Application number: 19198740.3
(22) Date of filing: 20.09.2019
(51) Int. Cl.: G03G 15/00

(54) **RECORDING MEDIUM FEED APPARATUS, METHOD OF FEEDING RECORDING MEDIUM AND CARRIER MEANS**

(30) Priority: 28.09.2018 JP 2018185997
(71) Applicant: Ricoh Company, Ltd., Tokyo 143-8555 (JP)
(72) Inventor: AKATSU, Takahiro, Tokyo, 143-8555 (JP)
(74) Representative: Watkin, Timothy Lawrence Harvey

(57) **Abstract**

A recording medium feed apparatus includes a manual feed unit (40), a first detection unit (45) configured to detect a first size corresponding to a size in a first direction of a recording medium placed on the manual feed unit (40), a second detection unit (46) configured to detect a second size corresponding to a size in a second direction of the recording medium placed on the manual feed unit (40), the second direction being different from the first direction, a storage unit (63) configured to store priority setting information, which is to be preferentially used for the recording medium feed apparatus (1), and a candidate display control unit (13ab, 13Aab, 13Bab, 13Cab) configured to estimate at least one candidate size of the recording medium based on the first size, the second size, and the priority setting information, and to display the at least one candidate size, on a display (12), as a candidate size of the recording medium.

## Description

### BACKGROUND

### Technical Field

This disclosure relates to a recording medium feed apparatus, a method of feeding a recording medium and carrier means.

### Background Art

Recording medium feed apparatuses include a manual feed unit used by operators for feeding recording media manually. For example, one image forming apparatus includes a recording medium feed apparatus, such as a manual feed unit used for feeding sheets as recording media to a manual feed port as disclosed in JP-H09-230751-A. The image forming apparatus of JP-H09-230751-A includes one sensor used for detecting a width size of sheet fed to the manual feed port, and another sensor used for detecting whether a sheet placement orientation is landscape or portrait orientation. The image forming apparatus determines a sheet size based on detection results of the two sensors. Further, the image forming apparatus displays a standard size of sheet corresponding to the identified sheet size on a display, and then an operator can select a suitable standard size from information displayed on the display. Then, the image forming apparatus forms an image on a sheet corresponding to the selected size, fed from the manual feed port.

The image forming apparatuses may be used in various regions of the world, and may be moved and used between regions. Further, for example, standard sizes of sheets used in each region, such as Japan, North America and Europe, are different. As to conventional image forming apparatuses, presenting standard sizes of various types of sheet to be set in the manual feed unit in accordance with preferential setting of sheets, such as sheet-use region setting, which is important for the image forming apparatuses disposed at a specific region is too difficult.

### SUMMARY

As one aspect of the present invention, a recording medium feed apparatus is devised. The recording medium feed apparatus includes a manual feed unit, a first detection unit configured to detect a first size corresponding to a size in a first direction of a recording medium placed on the manual feed unit, a second detection unit configured to detect a second size corresponding to a size in a second direction of the recording medium placed on the manual feed unit, the second direction being different from the first direction, a storage unit configured to store priority setting information, which is to be preferentially used for the recording medium feed apparatus, and a candidate display control unit configured to estimate at least one candidate size of the recording medium based on the first size, the second size, and the priority setting information, and to display the at least one candidate size, on a display, as a candidate size of the recording medium.

As another aspect of the present invention, a method of feeding a recording medium using a recording medium feed apparatus having a manual feed unit is devised. The method includes detecting a first size corresponding to a size in a first direction of the recording medium placed on the manual feed unit, detecting a second size corresponding to a size in a second direction of the recording medium placed on the manual feed unit, the second direction being different from the first direction, acquiring priority setting information, which is to be preferentially used for the recording medium feed apparatus, estimating at least one candidate size of the recording medium based on the first size, the second size, and the priority setting information, and displaying, on a display, the at least one candidate size as a candidate size of the recording medium.

As another aspect of the present invention, a carrier means carrying computer readable code for controlling a computer system to carry out a method a method of feeding a recording medium using a recording medium feed apparatus having a manual feed unit is devised. The method includes detecting a first size corresponding to a size in a first direction of the recording medium placed on the manual feed unit, detecting a second size corresponding to a size in a second direction of the recording medium placed on the manual feed unit, the second direction being different from the first direction, acquiring priority setting information, which is to be preferentially used for the recording medium feed apparatus, estimating at least one candidate size of the recording medium based on the first size, the second size, and the priority setting information, and displaying, on a display, the at least one candidate size as a candidate size of the recording medium.

As to the above-described aspects of the present invention, the above described recording medium feed apparatus and method of feeding a recording medium can present a size of recording medium according to the priority setting.

### BRIEF DESCRIPTION OF THE DRAWINGS

A more complete appreciation of the description and many of the attendant advantages and features thereof can be readily acquired and understood from the following detailed description with reference to the accompanying drawings, wherein:
FIG. 1 is an example cross-sectional view of an image forming apparatus according to a first embodiment;
FIG. 2 is a plan view of a manual feed unit of the image forming apparatus according to the first embodiment;
FIG. 3 is an example block diagram of a functional configuration of the image forming apparatus according to the first embodiment;
FIG. 4 is an example of information on sheet size usable or settable for a manual feed unit, which is stored in an apparatus-dependent information storage unit according to the first embodiment;
FIG. 5 is an example of information on sheet type usable or settable for the manual feed unit, which is stored in the apparatus-dependent information storage unit according to the first embodiment;
FIG. 6 is an example of information on sheet thickness usable or settable for the manual feed unit, which is stored in the apparatus-dependent information storage unit according to the first embodiment;
FIG. 7A is an example of refining information for one use region stored in the apparatus-dependent information storage unit according to the first embodiment;
FIG. 7B is another example of refining information for one use region stored in the apparatus-dependent information storage unit according to the first embodiment;
FIG. 8 is an example of refining information for another use region stored in the apparatus-dependent information storage unit according to the first embodiment;
FIG. 9 is an example of refining information for still another use region stored in the apparatus-dependent information storage unit according to the first embodiment;
FIG. 10 is an example block diagram of a functional configuration of the manual feed setting unit according to the first embodiment;
FIG. 11 is an example block diagram of a hardware configuration of the image forming apparatus according to the first embodiment;
FIG. 12 is an example sequence diagram illustrating an operation of the image forming apparatus according to the first embodiment;
FIG. 13 is an example of an operation screen of the image forming apparatus according to the first embodiment;
FIG. 14 is an example of an operation screen for setting settings of a manual feed tray sheet of the image forming apparatus according to the first embodiment;
FIG. 15 is an example of an operation screen used for changing sheet settings of the image forming apparatus according to the first embodiment;
FIG. 16 is another example of an operation screen used for changing sheet settings of the image forming apparatus according to the first embodiment;
FIG. 17 is another example of an operation screen used for changing sheet settings of the image forming apparatus according to the first embodiment;
FIG. 18 is another example of an operation screen used for changing sheet settings of the image forming apparatus according to the first embodiment;
FIG. 19 is an example of refining information used for refining a size of envelope when a use region is Japan according to the first embodiment;
FIG. 20 is an example of an operation screen used for selecting a sheet for the image forming apparatus when a sheet type is envelope according to the first embodiment;
FIG. 21 is another example of an operation screen used for selecting a sheet for the image forming apparatus when a sheet type is envelope according to the first embodiment;
FIG. 22 is an example of an operation screen for calling and registering sheet settings for the image forming apparatus according to the first embodiment;
FIG. 23 is an example of a guidance screen used for a sheet setting method of the image forming apparatus according to the first embodiment;
FIG. 24 is an example of information for displaying a guidance used for a sheet setting method according to the first embodiment;
FIG. 25 is an example block diagram of a functional configuration of a manual feed setting unit of an image forming apparatus according to a second embodiment;
FIG. 26 is an example block diagram of a functional configuration of a manual feed setting unit of an image forming apparatus according to a third embodiment;
FIG. 27 is an example of a sheet selection screen used for selecting a standard sheet size according to the third embodiment;
FIG. 28 is an example of information stored in a frequency accumulation unit according to the third embodiment;
FIG. 29 is an example block diagram of a functional configuration of a manual feed setting unit of an image forming apparatus according to a fourth embodiment;
FIG. 30 is an example of information stored in a frequency accumulation unit according to the fourth embodiment;
FIG. 31 is an example plan view of a manual feed unit of an image forming apparatus according to a fifth embodiment; and
FIG. 32 is an example block diagram of a functional configuration of a manual feed setting unit of the image forming apparatus according to the fifth embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION

A description is now given of exemplary embodiments of the present inventions. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present inventions.

In addition, it should be noted that the terminology used herein is for the purpose of describing particular embodiments only and is not intended to be limiting of the present inventions. Thus, for example, as used herein, the singular forms "a", "an" and "the" are intended to include the plural forms as well, unless the context clearly indicates otherwise. Moreover, the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

Hereinafter, a description is given of one or more embodiments of the present invention with reference to the accompanying drawings. In this specification and the accompanying drawings, the same reference numerals are assigned to the same functional components, and the description of the components having substantially the same functional structure is omitted from the description.

### First Embodiment:

### Configuration of Image Forming Apparatus:

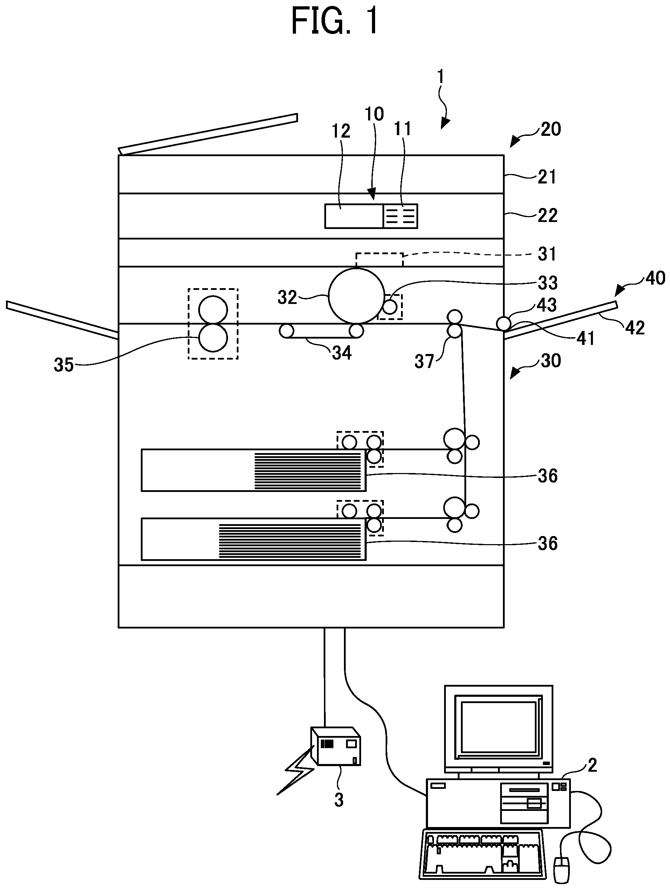

Hereinafter, a description is given of a configuration of an image forming apparatus 1 according to a first embodiment of the present invention with reference to FIG. 1. In this disclosure, the image forming apparatus 1 is described as an example of an apparatus configured to feed recording media. Hereinafter, the apparatus configured to feed recording media is referred to as the recording medium feed apparatus. The recording medium feed apparatus is not limited to the image forming apparatus 1, but can be any apparatus including a display unit and a manual feed unit, which can feed the recording media using the manual feed unit. The image forming apparatus 1 is described as an example of the recording medium feed apparatus.

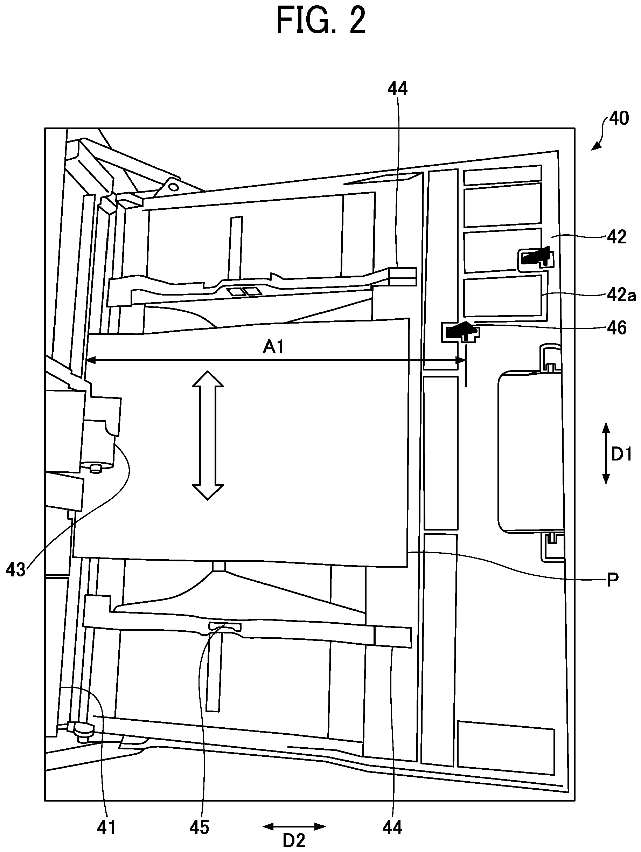

FIG. 1 is an example cross-sectional view of the image forming apparatus 1 according to the first embodiment. FIG. 2 is an example plan view of a manual feed unit 40 of the image forming apparatus 1 according to the first embodiment. As indicated in FIGs. 1 and 2, in the embodiment, the image forming apparatus 1 is an electrophotographic image forming apparatus, and is a multi-functional copying machine that forms images on recording media. The image forming apparatus can be any apparatus that forms images on the recording media, and can be, for example, a copying machine or a printing machine. The recording medium can be any medium on which surface image can be formed. The recording medium is sheet material, such as paper, cloth, film, or plate, but not limited thereto. Hereinafter, the terms of "recording medium" and "recording media" may be used in this description.

The image forming apparatus 1 includes, for example, a scanner function, a copying function, a printer function, and a facsimile function. The image forming apparatus 1 can generate image data from information read or scanned from a recording medium such as a sheet, and can form an image of the image data on a recording medium. Further, the image forming apparatus 1 can be configured to transmit the image data to a computer apparatus 2 such as a personal computer (PC), or to an external apparatus via a private branch exchanger (PBX) 3 and a telephone line. Further, the image forming apparatus 1 can form an image of information acquired from the computer apparatus 2 or acquired from the external apparatus via the PBX 3 on a recording medium.

As indicated in FIG. 1, the image forming apparatus 1 includes, for example, an operation unit 10, an image reading unit 20, and a print unit 30. The operation unit 10 is an interface for receiving an instruction related to an operation of the image forming apparatus 1 from an operator (e.g., user), and the operation unit 10 includes, for example, an input unit 11 and a display unit 12. The input unit 11 receives an input from the operator (e.g., user), and includes, for example, a touch panel and one or more buttons. The display unit 12 displays images indicating various information, and includes, for example, a display, a touch panel, or the like. The input unit 11 and the display unit 12 can be arranged as separate apparatuses, or can be disposed as an apparatus such as a touch panel integrating the input unit 11 and the display unit 12 as one single apparatus that is not separated. In the embodiment, the input unit 11 can be the touch panel and one or more buttons, and the touch panel can implement functions of the display unit 12.

The image reading unit 20 (image scanning unit) reads or scans information on a recording medium and outputs the information to the print unit 30 as image data. As indicated in FIG. 1, the image reading unit 20 includes, for example, an automatic document feeder (ADF) 21 and an image reader 22 (image scanner). The ADF 21 sequentially feeds document sheets placed thereon to the image reader 22. The image reader 22 acquires image data from surface of each sheet document fed from the ADF 21 and outputs the image data to the print unit 30 or the like.

The print unit 30 forms a toner image on a recording medium based on the image data to print an image on the recording medium. In the embodiment, the recording medium to be printed with the image is, for example, paper. Further, the paper includes, for example, sheet type recording medium and envelope. In the embodiment, the recording medium of paper is also referred to as "sheet" or a "transfer sheet."

As indicated in FIG. 1, the print unit 30 includes, for example, an exposure device 31, a photosensitive member 32, a development device 33, a transfer belt 34, a fixing device 35, a sheet feed unit 36, and a manual feed unit 40.

The exposure device 31 forms an electrostatic latent image on a surface of the photosensitive member 32 by irradiating light onto the photosensitive member 32 based on the image data acquired from the image reader 22. The development device 33 forms a toner image on the surface of the photosensitive member 32 by depositing toner particles onto the electrostatic latent image formed on the photosensitive member 32. The transfer belt 34 transfers the toner image onto the sheet fed on the transfer belt 34. After transferring the toner image onto the sheet, the fixing device 35 applies heat to the sheet to fix the toner image on the sheet. After the transfer sheet passes through the fixing device 35, the transfer sheet is discharged outside the image forming apparatus 1.

As indicated in FIG. 1, the manual feed unit 40 includes, for example, a manual feed tray 42 and a conveying roller 43, disposed at a manual feed port 41, which is set at one side of the image forming apparatus 1. The manual feed tray 42 can extend the outward from the manual feed port 41, and one or more sheets can be placed on the manual feed tray 42. The conveying roller 43 moves sheets placed on the manual feed tray 42 into the manual feed port 41 one by one, and conveys the sheet to a registration roller 37 disposed in the image forming apparatus 1 via a sheet guide.

The sheet feed unit 36 stores sheets therein. The sheets can be extracted one by one by a sheet feeding roller from the sheet feed unit 36 and then conveyed to the registration roller 37 via a plurality of sheet guides. The registration roller 37 conveys the sheet to the photosensitive member 32.

As indicated in FIG. 2, the manual feed unit 40 includes, for example, two guide plates 44 on an upper surface 42a of the manual feed tray 42. The two guide plates 44 are used to guide a sheet P in accordance with a size of the sheet P. The two guide plates 44 are movable along a direction D1, which is substantially perpendicular to a conveying direction D2 of the sheet P using the conveying roller 43. The two guide plates 44 guide the sheet P by sandwiching the sheet P from both sides of the direction D1, which is a width direction of the sheet P on the manual feed tray 42. The two guide plates 44 are linked with each other via a connecting part, with which the two guide plates 44 can move synchronously with each other in an externally-opposite direction and an internally-closing direction with each other.

Further, the manual feed unit 40 includes, for example, a first detection unit 45 used for detecting at least one of the two guide plates 44. By detecting a position of the guide plates 44, the first detection unit 45 can detect a width size of the sheet P on the manual feed tray 42 in the direction D1. This detection is referred to as the "main scanning." Specifically, the first detection unit 45 detects a space interval between the two guide plates 44 as the width size of the sheet P in the direction D1. The first detection unit 45 can be configured to detect the positions of two guide plates 44, or can be configured to detect a position of one of the guide plates 44 relative to the middle position of the two guide plates 44. The direction D1 is an example of a first direction, and the width size of the sheet P in the direction D1 is an example of a first size of the sheet P in this description.

Further, the manual feed unit 40 includes, for example, a second detection unit 46 used for detecting a length size of the sheet P in the direction D2 on the manual feed tray 42. In the embodiment, the second detection unit 46 is disposed at a position spaced away from the manual feed port 41 in the direction D2 as indicated in FIG. 2. The second detection unit 46 detects whether or not the sheet exists on the second detection unit 46. With this configuration, the second detection unit 46 can detect whether the length of the sheet P on the manual feed tray 42 is equal to or greater a length A1 or less than the length A1. In other words, the second detection unit 46 detects whether the length size of the sheet P is equal to or greater than the length A1 or less than the length A1. Hereinafter, this detection is referred to as "sub-scanning."

The "main scanning" and "sub-scanning" are merely names for the simplicity of expression of distinguishing the directions, in which the "main scanning" and "sub-scanning" may not mean the main detection and the sub-detection. Further, a plurality of the second detection units 46 can be disposed along the direction D2. With this configuration, variations in the length of the sheet P detectable by the second detection unit 46 can be increased. The direction D2 is an example of a second direction, and the length size of the sheet P in direction D2 is an example of a second size of the sheet P in this description.

Further, the first detection unit 45 can be configured to detect the position of the guide plates 44. For example, the first detection unit 45 can be a resistor whose resistance value varies in connection with the movement of the guide plates 44, or a sensor for detecting the position of the guide plates 44 using light or ultrasonic wave.

The second detection unit 46 can be configured to detect a sheet existence on the second detection unit 46. For example, the second detection unit 46 can be a contact sensor used for detecting a contact of sheet, or an optical sensor for detecting a blocking of light by the sheet. Further, each of the first detection unit 45 and the second detection unit 46 can be a sensor that performs scanning on the manual feed tray 42 using a laser beam to detect a width size and a length size of the sheet P.

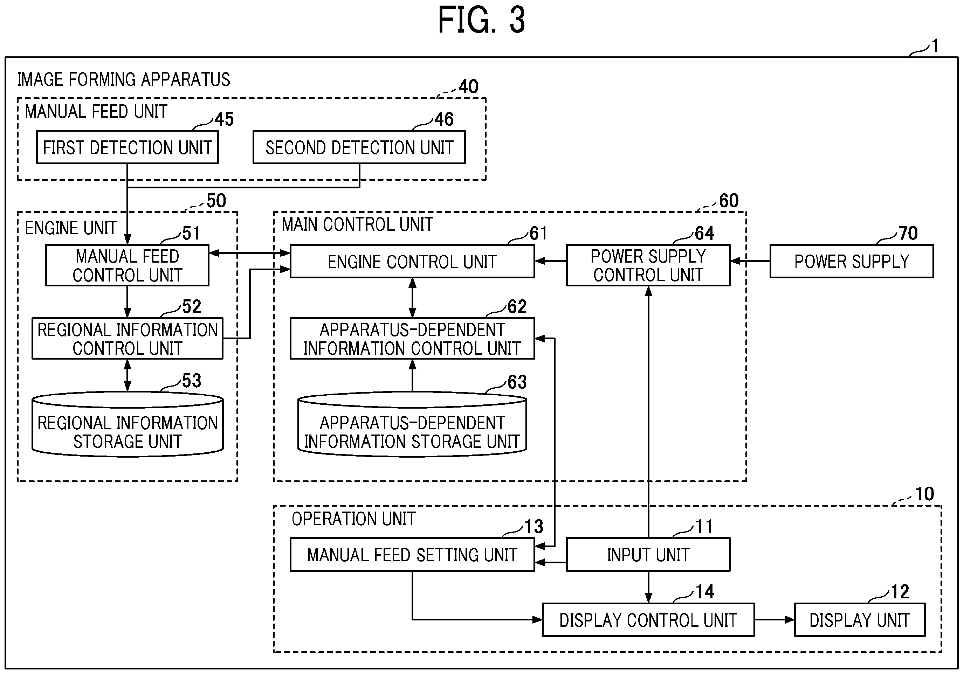

Hereinafter, a description is given of a functional configuration of the image forming apparatus 1 with reference to FIG. 3. FIG. 3 is an example block diagram of a functional configuration of the image forming apparatus 1 according to the first embodiment. As indicated in FIG. 3, the image forming apparatus 1 includes, for example, an operation unit 10, the manual feed unit 40, an engine unit 50, a main control unit 60, and a power supply 70. The manual feed unit 40 includes, for example, the first detection unit 45 and the second detection unit 46. The power supply 70 including a power supply circuit receives alternating current (AC) power from an external power source, such as a commercial AC power supply. The power supply 70 converts the supplied AC power to direct current (DC) power under a control of a power supply control unit 64, and supplies the DC power to each components of the image forming apparatus 1.

The engine unit 50 is a generic term for various drive units used for operating the image forming apparatus 1. As indicated in FIG. 3, the engine unit 50 includes, for example, a manual feed control unit 51, a regional information control unit 52, and a regional information storage unit 53.

The main control unit 60 controls the image forming apparatus 1 entirely. The main control unit 60 controls the operations of the manual feed unit 40, the engine unit 50 and the operation unit 10. As indicated in FIG. 3, the main control unit 60 includes, for example, an engine control unit 61, an apparatus-dependent information control unit 62, an apparatus-dependent information storage unit 63, and a power supply control unit 64.

As indicated in FIG. 3, the operation unit 10 includes, for example, an input unit 11, a display unit 12, a manual feed setting unit 13, and a display control unit 14.

The manual feed control unit 51 receives detection signals from the first detection unit 45 and the second detection unit 46. The manual feed control unit 51 specifies or determines an interval between the two guide plates 44 based on the detection signals of the first detection unit 45, and determines the interval as a width size of the sheet placed on the manual feed tray 42. For example, if the interval size, which is specified or determined from the detection signals received from the first detection unit 45, is changed and then the changed interval size does not change for a given period of time, the manual feed control unit 51 can determine the changed interval size as the width size of the sheet placed on the manual feed tray 42.

Further, the manual feed control unit 51 determines whether or not a sheet exists on the second detection unit 46 based on the detection signals received from the second detection unit 46. If the sheet exists on the second detection unit 46, the manual feed control unit 51 determines that a length size of the sheet is equal to or greater than the length A1, and if the sheet does not exist on the second detection unit 46, the manual feed control unit 51 determines that the length size of the sheet is less than the length A1. For example, if the detection signals of the second detection unit 46 do not change for a given period of time, the manual feed control unit 51 can determine the size specified by the detection signals as the length size of the sheet. Then, the manual feed control unit 51 outputs the determined width size and the length size of the sheet to the engine control unit 61.

The regional information control unit 52 controls or manages one or more use regions settable for the image forming apparatus 1. Hereinafter, the term of the "use region" may mean one or more use regions. The use region where the image forming apparatus 1 is used can be set using an external apparatus connected to the operation unit 10 or the image forming apparatus 1 before the shipment of the image forming apparatus 1 or after locating the image forming apparatus 1 at a user site.

For example, when a mode of setting the use region is activated in the operation unit 10, the regional information control unit 52 reads out a list of use region (use-allowable region list) stored in the regional information storage unit 53 and displays the use-allowable region list using the display unit 12. If an operator selects a specific use region from the use-allowable region list via the input unit 11, the regional information control unit 52 determines the selected specific use region as the use region set for the image forming apparatus 1, stores information of the determined specific use region in the regional information storage unit 53, and outputs the information on the determined specific use region to the engine control unit 61.

Further, when the input unit 11 receives information on the specific use region, such as a country or nation (e.g., U.S.) where the image forming apparatus 1 is to be used, the regional information control unit 52 compares the received information on the specific use region and the use-allowable region list stored in the region information storage unit 53 to determine the use region.

Further, when the image forming apparatus 1 is activated, the regional information control unit 52 outputs the information on the specific use region, set for the image forming apparatus 1 and stored in the region information storage unit 53, to the engine control unit 61. For example, the activation of the image forming apparatus 1 can be performed by inserting a power plug of the image forming apparatus 1 into an outlet, or switching a power switch of the image forming apparatus 1 from OFF-state to ON-state. Further, the image forming apparatus 1 can be deactivated by removing the power plug of the image forming apparatus 1 from the outlet, or switching the power switch of the image forming apparatus 1 from ON-state to OFF-state.

The regional information storage unit 53 stores the use-allowable region list including one or more use regions which can be set for the image forming apparatus 1, and information of use-set region, which includes one or more use regions set and registered for the image forming apparatus 1. The information on use-set region is an example of priority setting information.

The engine control unit 61 distributes power supplied through the power supply control unit 64 to the respective drive units of the engine unit 50 to control the operations of the respective drive units. For example, the engine control unit 61 controls the operation of each drive unit in view of a sheet feeding unit designated or specified by the input unit 11. The sheet feeding unit is implemented by the manual feed unit 40 and the sheet feed unit 36. Further, when a printing operation is to be performed on a sheet fed by the manual feed unit 40, the engine control unit 61 controls the operation of each drive unit based on information on the width size and the length size of the sheet acquired from the manual feed control unit 51 and information on the use-set region acquired from the regional information control unit 52. Further, the engine control unit 61 outputs the use-set region, the width size and the length size of the sheet to the apparatus-dependent information control unit 62.

The apparatus-dependent information control unit 62 acquires information on the to-be-printed sheet and outputs the acquired information on the to-be-printed sheet to the manual feed setting unit 13 of the operation unit 10. Specifically, the apparatus-dependent information control unit 62 acquires the use-set region of the image forming apparatus 1 from the engine control unit 61. The apparatus-dependent information control unit 62 compares the use-set region and the apparatus-dependent information stored in the apparatus-dependent information storage unit 63 to acquire the apparatus-dependent information corresponding to the use-set region, and outputs the apparatus-dependent information to the manual feed setting unit 13 of the operation unit 10. Further, the apparatus-dependent information control unit 62 acquires information on the sheet feeding unit designated via the input unit 11, and outputs the information on the sheet feeding unit to the engine control unit 61.

The apparatus-dependent information varies depending on each model of the image forming apparatus 1. The apparatus-dependent information includes, for example, specific sheet-related information and refining information. The specific sheet-related information includes, for example, sheet size, sheet type, and sheet thickness of sheet printable by the image forming apparatus 1. The refining information includes, for example, information specifying or identifying a standard size of the sheet based on the width size and the length size of the sheet and the use region. The apparatus-dependent information is set for each use region and stored in the apparatus-dependent information storage unit 63. The apparatus-dependent information is an example of the priority setting information.

For example, the refining information includes, for example, information indicating the positions of the first detection unit 45 and the second detection unit 46 on the manual feed tray 42. The information indicating the positions of the first detection unit 45 and the second detection unit 46 includes, for example, a distance of the first detection unit 45 from the center position between the two guide plates 44, and the length A1 and the direction D2 for the second detection unit 46. The sheet thickness includes, for example, information on sheet thickness that can be printed for each of one-side and both-side printing. The standard size is a size determined by the sheet standard specification. In a case of rectangular sheet, the size of shorter side and the size of longer side are defined for each standard size.

As described above, the apparatus-dependent information storage unit 63 stores the apparatus-dependent information dependent on the model type of the image forming apparatus 1. The sheet size, sheet type, sheet thickness and the refining information comprising the apparatus-dependent information can be pre-set and stored in the apparatus-dependent information storage unit 63. The apparatus-dependent information storage unit 63 is an example of a storage unit, such as a memory.

In the embodiment, the priority setting information of the image forming apparatus 1 includes information related to the use region of the image forming apparatus 1. In other words, the information related to the use region of the image forming apparatus 1 is an example of the priority setting information. Further, the information related to the use region of the image forming apparatus 1 includes at least one of the information on the use-set region and the apparatus-dependent information corresponding to the use-set region, set for the image forming apparatus 1. In other words, the information on the use-set region and the apparatus-dependent information corresponding to the use-set region are examples of information related to the use region of the image forming apparatus 1.

The priority setting information is not limited to the information related to the use region of the image forming apparatus 1, but the priority setting information can be any setting information that the image forming apparatus 1 uses preferentially. For example, the priority setting information can include information on an operation mode preferentially used by the image forming apparatus 1 depending on the use region, usage state, setting state, or the like of the image forming apparatus 1, or the priority setting information can include information on the sheet size to be used preferentially by the image forming apparatus 1 depending on the usage state or the setting state of the image forming apparatus 1.

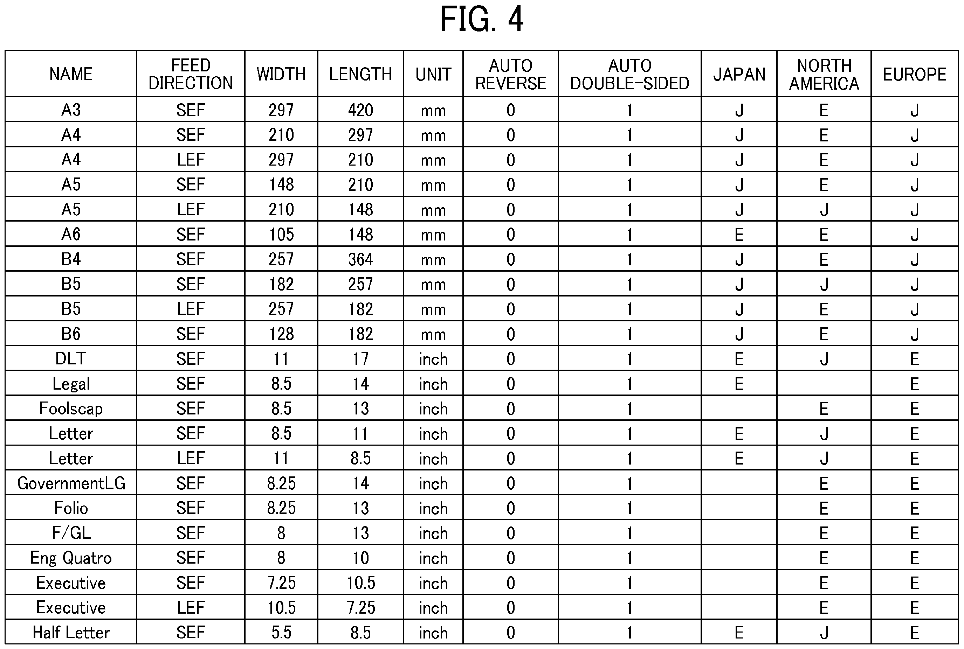

Hereinafter, a description is given of the apparatus-dependent information with reference to FIG. 4. FIG. 4 is an example of information on sheet size usable or settable for the manual feed unit 40, which is stored in the apparatus-dependent information storage unit 63 according to the first embodiment.

As indicated in FIG. 4, information on the sheet size usable for the manual feed unit 40 includes, for example, name of standard sheet size, sheet feed direction at the time of printing (e.g., LEF(landscape) and SEF(portrait)), width and length of sheet in the sheet feed direction, which are associated with each other. Further, in addition to the above-mentioned information, the sheet size information can include information indicating whether the sheet can be reversed automatically and printed, and information indicating whether or not the double-sided printing can be performed automatically. In FIG. 4 and other drawings, "can perform" is represented by "1" and "cannot perform" is represented by "0." Further, the sheet size information can include information on the usage state in each region. FIG. 4 indicates the usage state of each sheet size in three regions, such as Japan, North America and Europe. In FIG. 4, "J" is set for a generally use state, and "E" is set to a state that can be used, and nothing is set to a state that is not used.

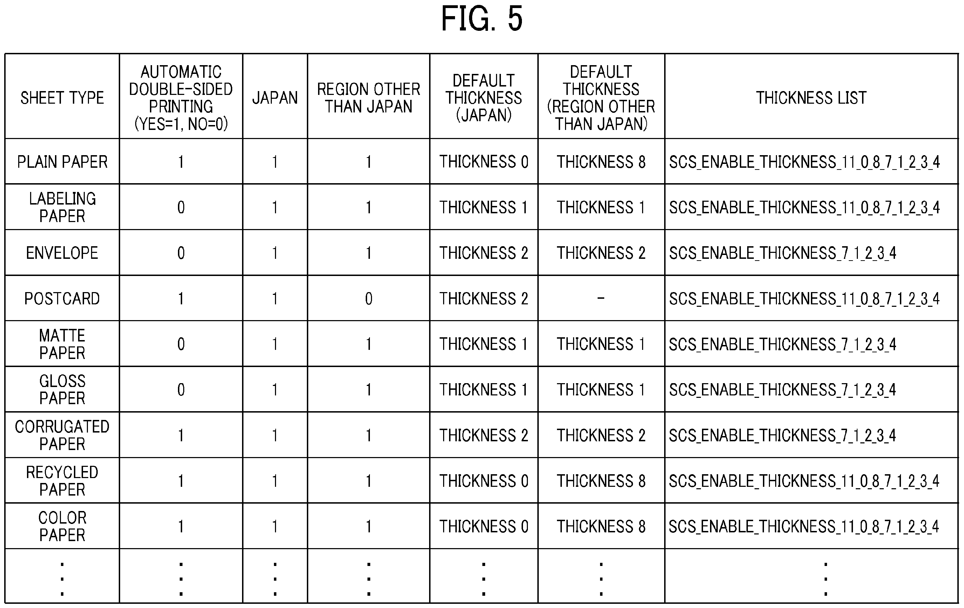

FIG. 5 is an example of information on sheet type usable or settable for the manual feed unit 40, which is stored in the apparatus-dependent information storage unit 63 according to the first embodiment. As indicated in FIG. 5, the information on sheet type usable by the manual feed unit 40 includes, for example, information on sheet type and information indicating whether or not each sheet type can be used in each region, which are associated with each other. In an example case of FIG. 5, the information on sheet type indicates whether each sheet type can be used in Japan and a region other than Japan. The information on sheet type can include information indicating whether or not automatic double-sided printing can be performed on each sheet type, information indicating thicknesses of each sheet type set for the image forming apparatus 1 for each region as the initial setting, and information indicating am information reference site of thickness of each sheet type useable in the image forming apparatus 1.

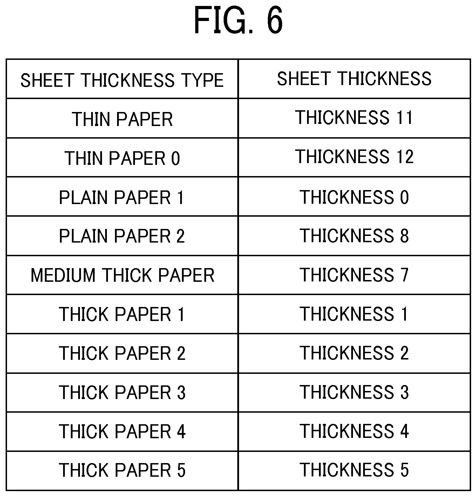

FIG. 6 is an example of information on sheet thickness usable or settable for the manual feed unit 40, , which is stored in the apparatus-dependent information storage unit 63 according to the first embodiment. As indicated in FIG. 6, the information on sheet thickness usable for the manual feed unit 40 includes, for example, parameters of sheet thickness and names of the sheet thickness type set in advance for the image forming apparatus 1. The information on sheet thickness can include information indicating whether automatic double-sided printing can be performed for each sheet having given sheet thickness.

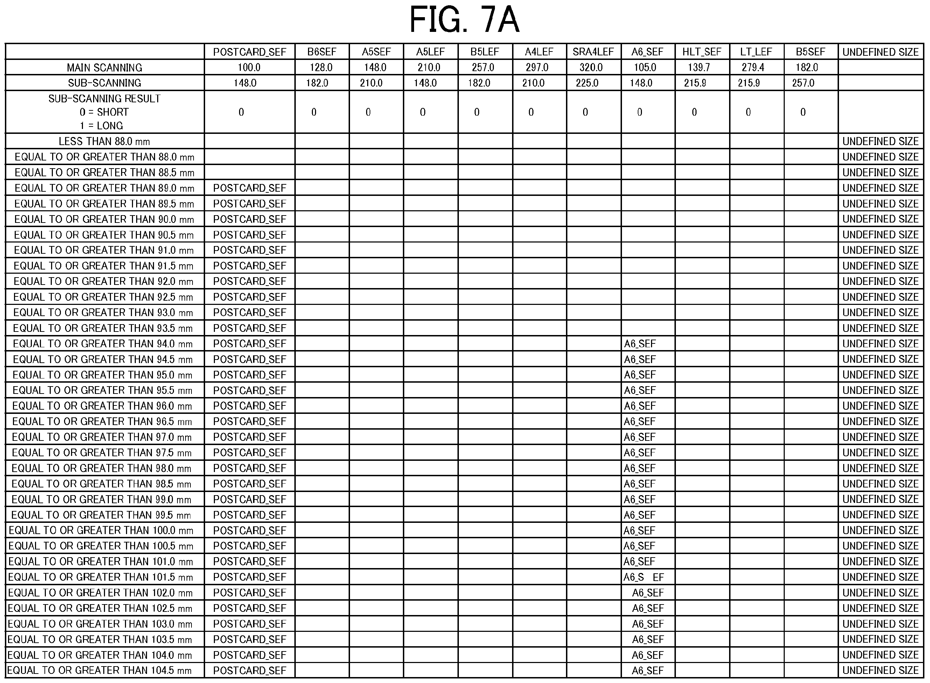

Hereinafter, a description is given of the refining information with reference to FIGs. 7A, 7B, 8 and 9. FIGs. 7A, 7B, 8 and 9 are example tables of the refining information on the respective use regions stored in the apparatus-dependent information storage unit 63 according to the first embodiment.

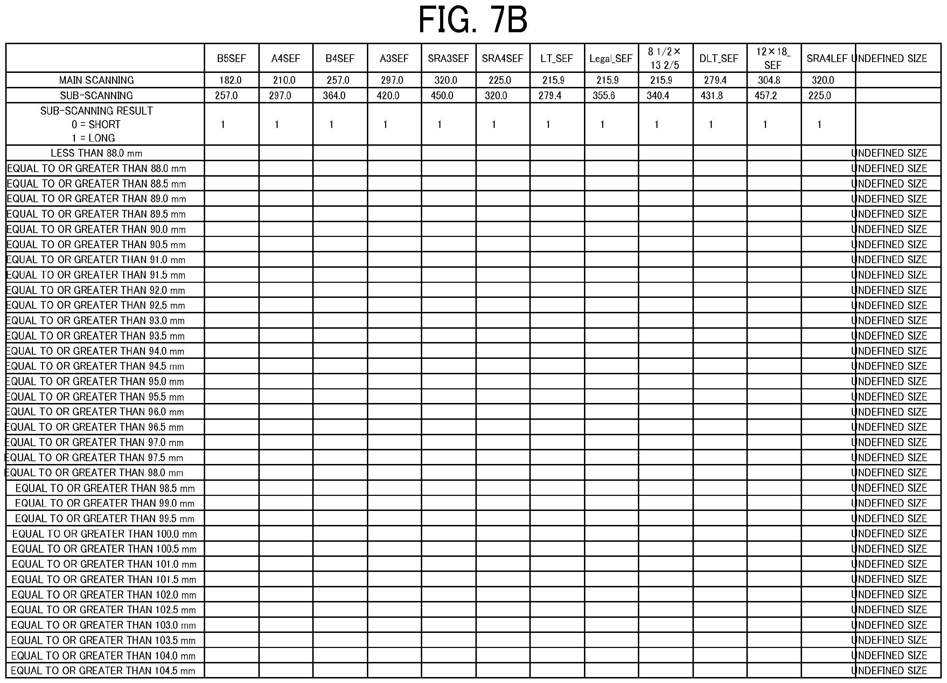

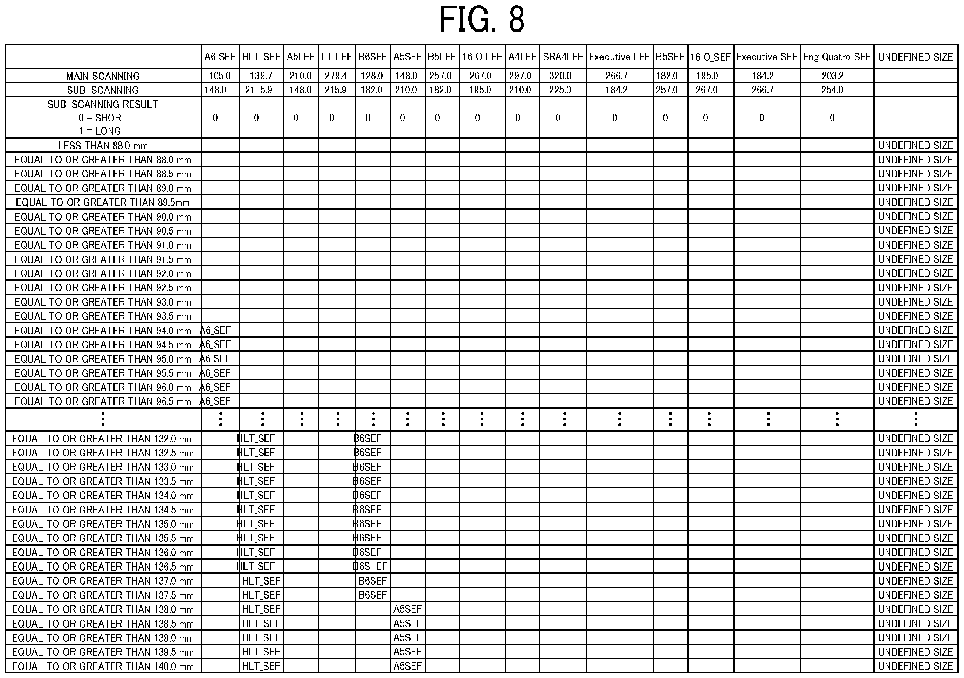

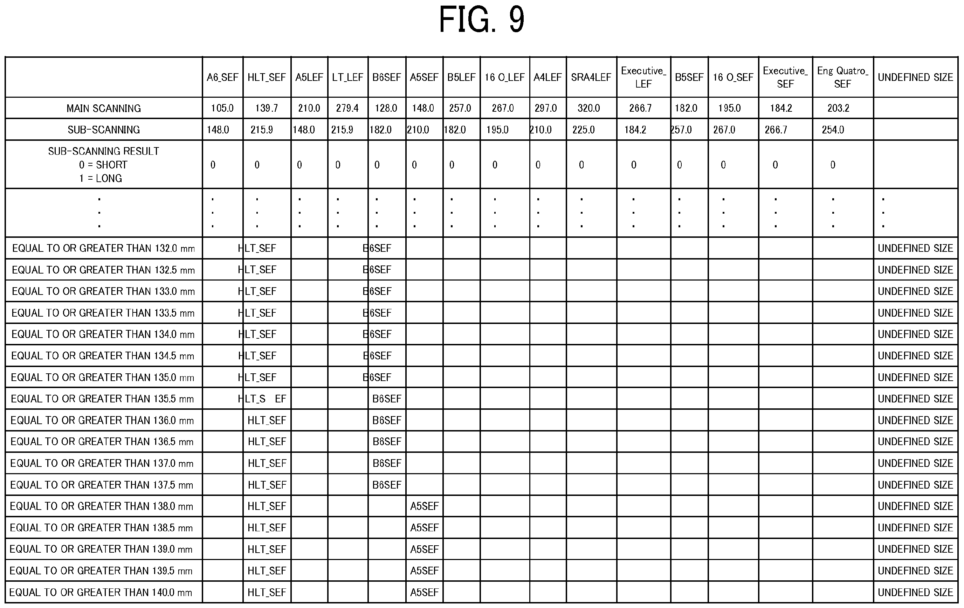

FIGs. 7A and 7B are example tables of the refining information when the use region is Japan. The table of FIG. 7A corresponds to a case that the sub-scanning result is less than the length A1. The table of FIG. 7B corresponds to a case that the sub-scanning result is equal to or greater than the length A1. FIG. 8 is an example of the refining information when the use region is North America and the sub-scanning result is less than the length A1. FIG. 9 is an example of the refining information when the use region is Europe and the sub-scanning result is less than the length A1.

Among the columns of FIGs. 7A, 7B, 8 and 9, the most-left column indicates a size range in the main scanning. The other columns, set along the rightward direction from the most-left column of the size range in the main scanning, indicate the association between the respective size range in the main scanning and the respective standard sizes and the feed direction in the main scanning. The columns of standard size and the feed direction indicate the dimension of the standard size in the main scanning, the dimension of the standard size in the sub-scanning, the sub-scanning result, and the main scanning result. The sub-scanning result is indicated by "0" for less than the length A1 and by "1" for the length A1 or more. The main scanning result indicates the standard size and the feed direction if the main scanning result corresponds to the size range of the main scanning, but becomes vacant if the main scanning result does not correspond to the size range of the main scanning.

The power supply control unit 64 controls power conversion and power supply from the power supply 70 in accordance with commands and information, which is received via the input unit 11 of the operation unit 10. Further, the power supply control unit 64 controls the state of the image forming apparatus 1. The state of the image forming apparatus 1 includes, for example, a sleep state in which the function of the image forming apparatus 1 is limited and power consumption is set lower, and a standby state in which the image forming apparatus 1 can perform the function quickly and the power consumption is higher than the sleep state.

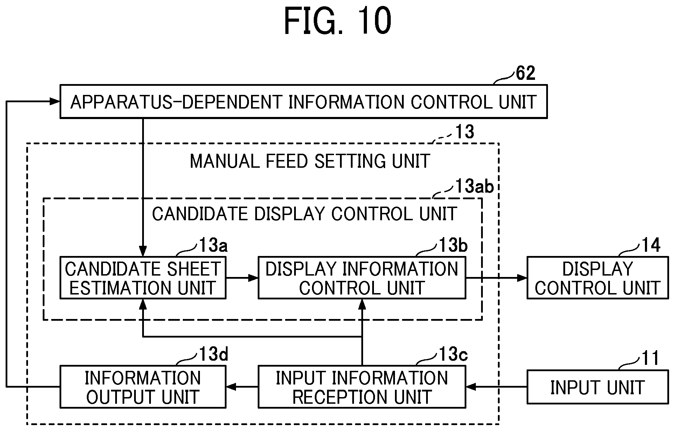

FIG. 10 is an example block diagram of a functional configuration of the manual feed setting unit 13 according to the first embodiment. As indicated in FIGs. 3 and 10, the manual feed setting unit 13 controls a manual feed setting application, which is an application used for setting manual feed sheet settings. As indicated in FIG. 10, the manual feed setting unit 13 includes, for example, a candidate display control unit 13ab, an input information reception unit 13c, and an information output unit 13d used for executing the manual feed setting application. As indicated in FIG. 10, the candidate display control unit 13ab includes, for example, a candidate sheet estimation unit 13a and a display information control unit 13b.

The candidate sheet estimation unit 13a acquires the apparatus-dependent information corresponding to the use-set region, and the width size and the length size of the sheet placed on the manual feed unit 40 from the apparatus-dependent information control unit 62. For example, when an instruction for feeding the sheet using the manual feed unit 40 is input by an operator (e.g., user) via the input unit 11, the manual feed setting unit 13 is activated and the candidate sheet estimation unit 13a acquires the apparatus-dependent information corresponding to the use-set region, and the width size and the length size of the sheet placed on the manual feed unit 40. Then, the candidate sheet estimation unit 13a estimates a candidate of standard sheet size (hereinafter, "estimated sheet size") based on the refining information included in the apparatus-dependent information, and the width size and the length size of the sheet. If there is no matching standard size, "undefined" becomes the candidate sheet size. The candidate sheet estimation unit 13a outputs the estimated sheet size (candidate sheet size) and the apparatus-dependent information to the display information control unit 13b.

The display information control unit 13b acquires the command and information input via the input unit 11 from the input information reception unit 13c, selects appropriate information from the sheet-related information included in the apparatus-dependent information and the estimated sheet size in accordance with the command and information input via the input unit 11, and outputs the selected appropriate information to the display control unit 14.

Therefore, the candidate display control unit 13ab estimates the candidate of standard size sheet based on the apparatus-dependent information corresponding to the use-set region and the width size of the sheet placed on the manual feed unit 40, and outputs a command instructing the display control unit 14 to display the candidate of the standard size sheet using the display unit 12 as the candidate sheet size.

The input information reception unit 13c acquires a command and information input via the input unit 11, and outputs the command and information to the candidate sheet estimation unit 13a, the display information control unit 13b and the information output unit 13d. For example, when an operator (e.g., user) selects, via the input unit 11, any one of information output by the display information control unit 13b, the input information reception unit 13c outputs the selected information to the information output unit 13d.

Then, the information output unit 13d outputs the information acquired from the input information reception unit 13c to the apparatus-dependent information control unit 62. Then, the apparatus-dependent information control unit 62 outputs the information to the engine control unit 61, and then the engine control unit 61 controls the respective drive units based on the information.

The display control unit 14 controls displaying of a screen using the display unit 12. For example, the display control unit 14 generates image data corresponding to a command and information input via the input unit 11, and displays an image of the generated image data using the display unit 12. The display control unit 14 generates the image data corresponding to the sheet-related information and the estimated sheet size output by the display information control unit 13b, and instructs the display unit 12 to display the image data.

Hereinafter, a description is given of an estimation function of the candidate sheet estimation unit 13a with reference to FIGs. 7A and 7B. For example, the candidate sheet estimation unit 13a refers to the information of FIG. 7A or FIG. 7B when the use-set region is Japan.

For example, if the main scanning result is less than 89.0 mm and the sub-scanning result is less than the length A1, the candidate sheet estimation unit 13a determines the estimated sheet size as "undefined" based on the information of FIG. 7A. By contrast, if the main scanning result is 94.0 mm and the sub-scanning result is less than the length A1, the candidate sheet estimation unit 13a determines the estimated sheet size as postcard" and "A6" based on the information of FIG. 7A.

If the main scanning result is less than 89.0 mm and the sub-scanning result is equal to or greater than the length A1, the candidate sheet estimation unit 13a determines the estimated sheet size as "undefined" based on the information of FIG. 7B. By contrast, if the main scanning result is 94.0 mm and the sub-scanning result is equal to or greater than the length A1, the candidate sheet estimation unit 13a determines the estimated sheet size as "undefined" based on the information of FIG. 7B.

Further, if the use-set region is North America, the candidate sheet estimation unit 13a refers to the information of FIG. 8 or the refining information of North America where the sub-scanning result is equal to or greater than the length A1. For example, if the main scanning result is 94.0 mm and the sub-scanning result is less than the length A1, the candidate sheet estimation unit 13a determines the estimated sheet size as "A6" based on the information of FIG. 8.

Further, if the use-set region is Europe, the candidate sheet estimation unit 13a refers to the information in FIG. 9 or the refining information of Europe where the sub-scanning result is equal to or greater than the length A1 to determine the candidate of standard size sheet.

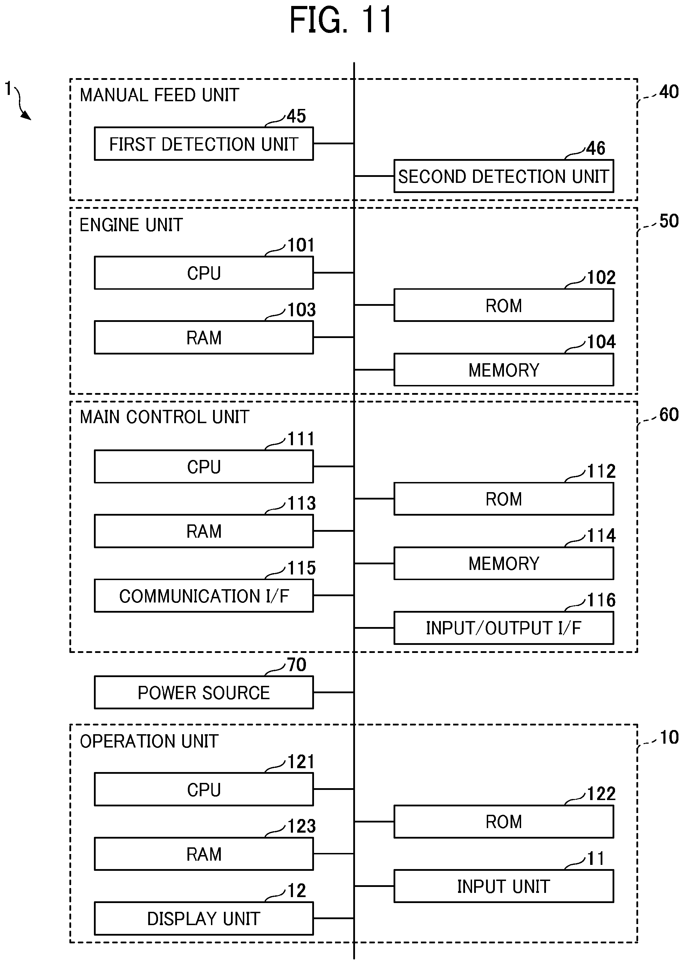

Hereinafter, a description is given of a hardware configuration of the image forming apparatus 1 with reference to FIG. 11. FIG. 11 is an example block diagram of a hardware configuration of the image forming apparatus 1 according to the first embodiment. As indicated in FIG. 11, the manual feed unit 40 includes, for example, the first detection unit 45 and the second detection unit 46.

As indicated in FIG. 11, the engine unit 50 includes, for example, a central processing unit (CPU) 101, a read only memory (ROM) 102, a random access memory (RAM) 103, and a memory 104. The CPU 101 implements the functions of the manual feed control unit 51 and the regional information control unit 52. The memory 104 implements the function of the region information storage unit 53.

As indicated in FIG. 11, the main control unit 60 includes, for example, a CPU 111, a ROM 112, a RAM 113, a memory 114, a communication interface (I/F) 115, and an input/output I/F 116. The CPU 111 implements the functions of the engine control unit 61, the apparatus-dependent information control unit 62, and the power supply control unit 64. The memory 114 implements the function of the apparatus-dependent information storage unit 63.

The communication I/F 115 connects the image forming apparatus 1 to a computer network such as Ethernet (registered trademark) and a communication network such as the Internet via wired communication or wireless communication to enable transmission and reception of information via the network.

The input/output I/F 116 connects the image forming apparatus 1 and an external apparatus or device via wired communication or wireless communication to enable transmission and reception of information via a network. Examples of the external apparatus or device include any computer-included apparatus, such as personal computer, camera, smartphone, storage device, recording medium, or the like. An example of the storage device is a hard disk drive (HDD) and a solid-state state drive (SSD), and an example of a recording medium is a flash memory, a recording disk, and a memory card.

As indicated in FIG. 11, the operation unit 10 includes, for example, a CPU 121, a ROM 122, a RAM 123, an input unit 11, and a display unit 12. The CPU 121 implements the functions of the manual feed setting unit 13 and the display control unit 14.

The components of the manual feed unit 40, the components of the engine unit 50, the components of the main control unit 60, the components of the operation unit 10, and the power supply 70 are connected to each other, for example, via a bus. The above components can be connected via wired communication and wireless communication.

Each of the memories 104 and 114 employs a non-volatile semiconductor memory, a storage device such as HDD or SSD. The memory 104 and 114 can include ROM and/or RAM.

Each of the CPU 101, 111 and 121 employs one or more processors or processing circuitry, each of the ROM 102, 112 and 122 employs one or more non-volatile semiconductor memories, and each of the RAM 103, 113 and 123 employs one or more volatile semiconductor memories. The one or more programs for operating each component is stored in the ROM or memory. The program is read out by the CPU from the ROM or memory and loaded on the RAM. The CPU executes each coded instruction in the program loaded on the RAM. The program can be stored in a recording medium such as a recording disk in addition to or instead of the ROM and memory. The program can be transmitted via a wired network, a wireless network or a broadcasting network, and then loaded on the RAM.

The above-described components can be implemented by a program execution unit such as a CPU or the like, can be implemented by one or more processors or processing circuits, or circuitry, or can be implemented by a combination of the program execution unit and the one or more processors or processing circuits, or circuitry. For example, the above-described components can be implemented as an integrated circuit, such as large scale integration (LSI). The above-described components can be individually manufactured as one chip, and can be manufactured as one chip including a part or all of the components. The LSI can be, for example, field programmable gate array (FPGA), a reconfigurable processor capable of reconstructing the connection and/or settings of circuit cells inside the LSI, or application specific integrated circuit (ASIC) combining a plurality of functional circuits designed for specific application.

### Operation of Image Forming Apparatus:

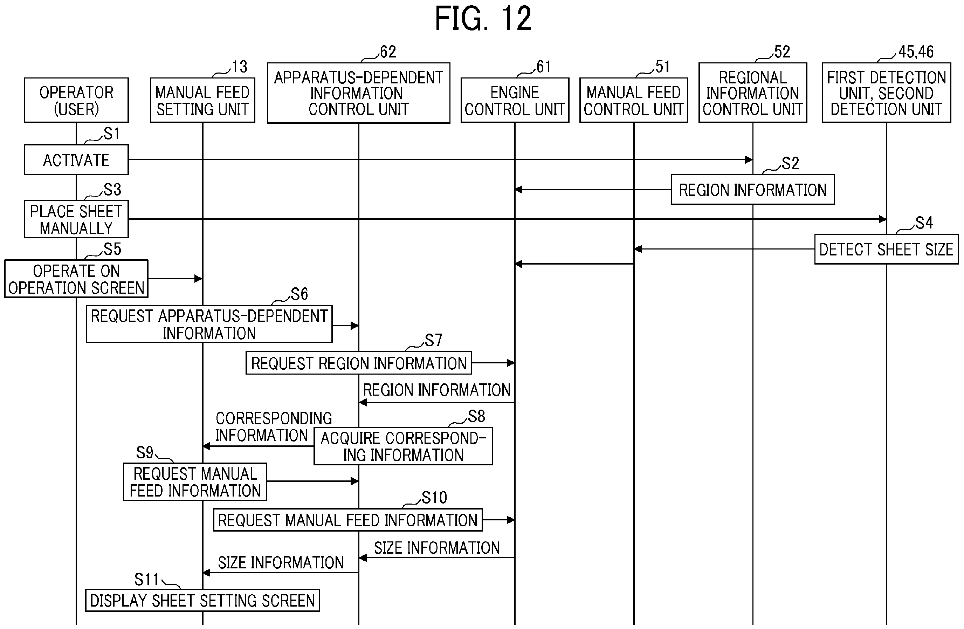

Hereinafter, a description is given of an operation of the image forming apparatus 1 according to the first embodiment with reference to FIG. 12. FIG. 12 is an example sequence diagram illustrating an operation of the image forming apparatus 1 according to the first embodiment, and specifically, an example of a printing operation using the manual feed unit 40.

As indicated in FIG. 12, when an operator (e.g., user) activates the image forming apparatus 1 (step S1), the regional information control unit 52 acquires region information indicating the use-set region of the image forming apparatus 1 from the region information storage unit 53, and outputs the region information to the engine control unit 61 (step S2).

Then, the operator places one or more sheets on the manual feed tray 42 and moves the two guide plates 44 into the direction D1 to contact one side of the sheet to one of the two guide plates 44 and the opposite side of the sheet to the other one of the two guide plates 44, respectively (step S3), in which the operator places the sheets manually.

Then, each of the first detection unit 45 and the second detection unit 46 respectively detects the width size of sheet along the direction D1 and the length size of sheet along the direction D2, and outputs the width size and the length size of the sheet to the manual feed control unit 51 (step S4). Further, the manual feed control unit 51 outputs the sheet size information including the width size and the length size of sheet to the engine control unit 61.

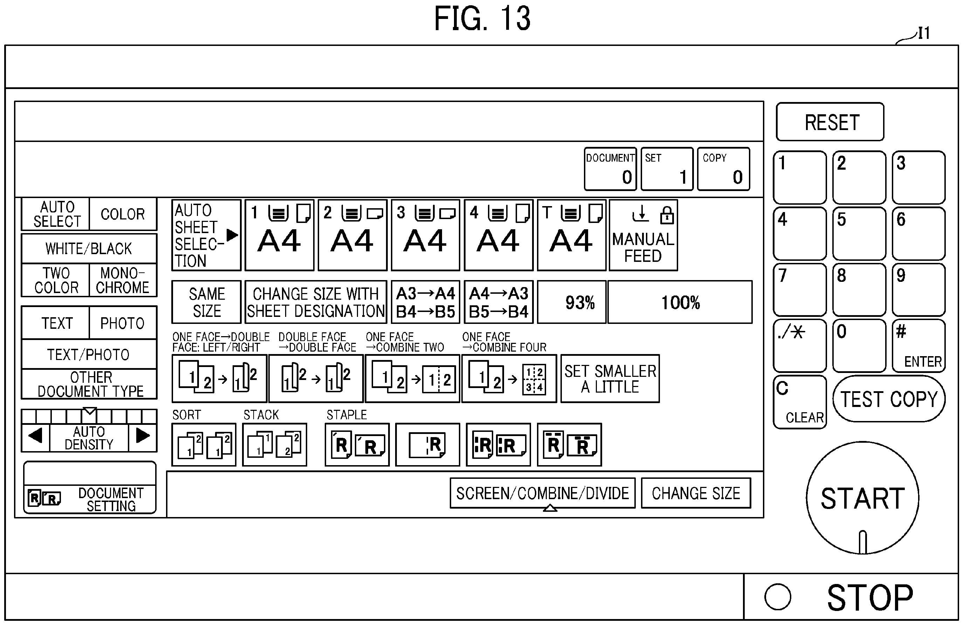

Then, the operator operates an operation screen I1 displayed on the display unit 12, as indicated in FIG. 13, via the input unit 11 of the operation unit 10 to input settings of the sheet placed on the manual feed tray 42 (step S5). Hereinafter, it is assumed that the display unit 12 is a touch panel, and the display unit 12 can perform at least part of the functions of the input unit 11. By pressing a button of "manual feed" on the operation screen I1 (FIG. 13) using a finger, the operator inputs a request for displaying a manual feed setting screen. FIG. 13 is an example of an operation screen of the image forming apparatus 1 according to the first embodiment.

Then, the manual feed setting unit 13 activates the manual feed setting application. If the manual feed setting application is activated for the first time after activating the image forming apparatus 1, the manual feed setting unit 13 requests the apparatus-dependent information to the apparatus-dependent information control unit 62 (step S6).

Then, the apparatus-dependent information control unit 62 requests the region information to the engine control unit 61 and acquires or obtains the region information from the engine control unit 61 (step S7).

Then, the apparatus-dependent information control unit 62 refers to the apparatus-dependent information storage unit 63 to search and acquire the apparatus-dependent information corresponding to the use-set region as corresponding information (step S8). Then, the apparatus-dependent information control unit 62 outputs the corresponding information, which is the apparatus-dependent information corresponding to the use-set region, to the manual feed setting unit 13.

As above described, when the manual feed setting application is activated for the first time after activating the image forming apparatus 1, the manual feed setting unit 13 acquires the corresponding information and retains the corresponding information in a storage device such as the RAM 123 until the image forming apparatus 1 is deactivated later. Further, the manual feed setting unit 13 can activate the manual feed setting application when the button of "manual feed" is selected, or can activate the manual feed setting application automatically when the sheet is placed on the manual feed tray 42. Further, the manual feed setting unit 13 can be configured to allow the operator to select any one of the above two activation methods of the manual feed setting application.

Then, the manual feed setting unit 13 retaining the corresponding information requests manual feed information indicating the state of the sheet placed on the manual feed tray 42 to the apparatus-dependent information control unit 62 (step S9). The manual feed information includes the sheet size information acquired in step S4.

Then, the apparatus-dependent information control unit 62 requests the manual feed information to the engine control unit 61 (step S10). Then, the apparatus-dependent information control unit 62 acquires the sheet size information from the engine control unit 61, and then outputs the sheet size information to the manual feed setting unit 13.

Then, the manual feed setting unit 13 determines an estimated sheet size of the sheet placed on the manual feed tray 42 based on the corresponding information and the sheet size information.

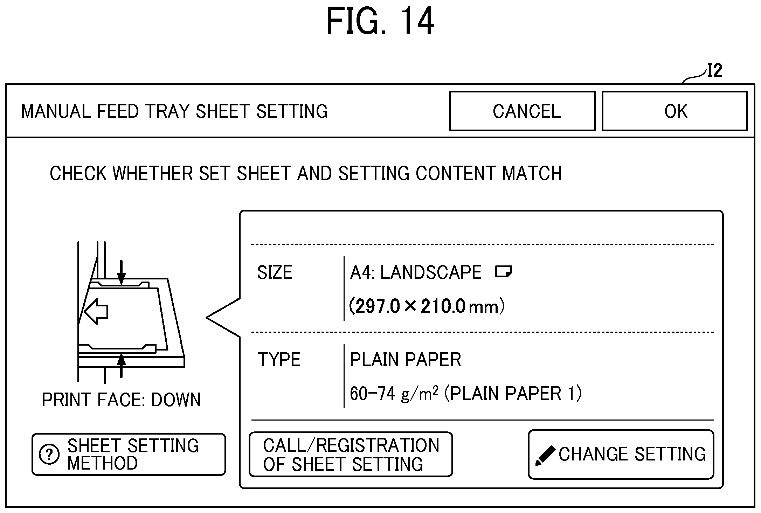

Then, the manual feed setting unit 13 displays, on the display unit 12, a manual feed tray sheet setting screen 12 indicated in FIG. 14, which includes the estimated sheet size of the sheet (step S11). FIG. 14 is an example of an operation screen used for setting the sheet settings of the manual feed tray of the image forming apparatus 1 according to the first embodiment.

In the manual feed tray sheet setting screen 12 (FIG. 14), a size field displays at least one estimated sheet size, and a type field displays the sheet type. The size field can display any one of the estimated sheet sizes. If the estimated sheet size is not detected, the size field can display a pre-set default standard size, a standard size previously used by the manual feed unit 40, or the most-frequently-used standard size as the sheet size. Further, the type field can display a pre-set default type, a type previously used by the manual feed unit 40, or the most-frequently-used type as the sheet type.

As described above, the image forming apparatus 1 estimates the size of sheet placed on the manual feed tray 42 by performing steps S1 to S10, and presents the estimated sheet size to the operator in step S11.

Hereinafter, a description is given of an operation of the image forming apparatus 1 including the determination processing of the size of sheet placed on the manual feed tray 42 after displaying the manual feed tray sheet setting screen 12 with reference to FIG. 14. After determining the size of sheet placed on the manual feed tray 42, the image forming apparatus 1 forms or prints an image on the sheet placed on the manual feed tray 42 in accordance with the determined size of the sheet.

If the operator can accept the size and type of the sheet displayed on the manual feed tray sheet setting screen 12 (FIG. 14), the operator presses a button of "OK." By contrast, if the operator cannot accept the size and type of the sheet displayed on the manual feed tray sheet setting screen 12, the operator presses any one of buttons of "cancel," "call/registration of sheet setting," "sheet setting method," and "change setting."

If the button of "cancel" is pressed, the manual feed setting unit 13 cancels the printing using the manual feed unit 40.

If the button of "call/registration of sheet setting" is pressed, the manual feed setting unit 13 stores the sheet setting used with higher frequency or calls a sheet setting registration screen to be displayed on the display unit 12.

If the button of "sheet setting method" is pressed, the manual feed setting unit 13 displays a guidance screen of sheet setting method on the display unit 12.

If the button of "change setting" is pressed, the manual feed setting unit 13 performs processing to change the sheet size and/or sheet type displayed on the screen of the display unit 12.

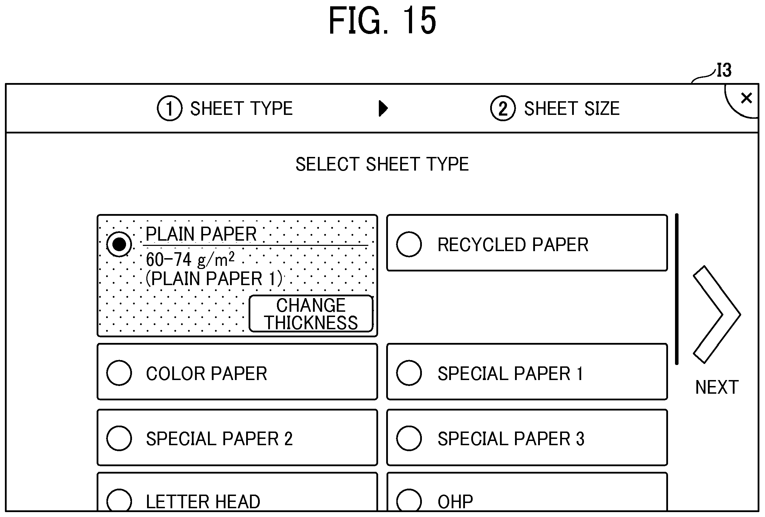

For example, if the button of "change setting" is pressed, the manual feed setting unit 13 sequentially displays sheet selection screens 13 to 16 indicated in FIGs. 15 to 18 on the display unit 12. FIGs. 15 to 18 are examples of operation screens used for changing the sheet settings for the image forming apparatus 1 according to the first embodiment.

At first, the manual feed setting unit 13 displays the sheet selection screen 13 (FIG. 15) for selecting a sheet type. The manual feed setting unit 13 displays, on the sheet selection screen 13, one or more of sheet types included in the apparatus-dependent information corresponding to the retained use-set region as the candidate sheet type. The sheet selection screen 13 can be configured to display all of the sheet types stored in the apparatus-dependent information, or one or more of pre-set sheet type alone.

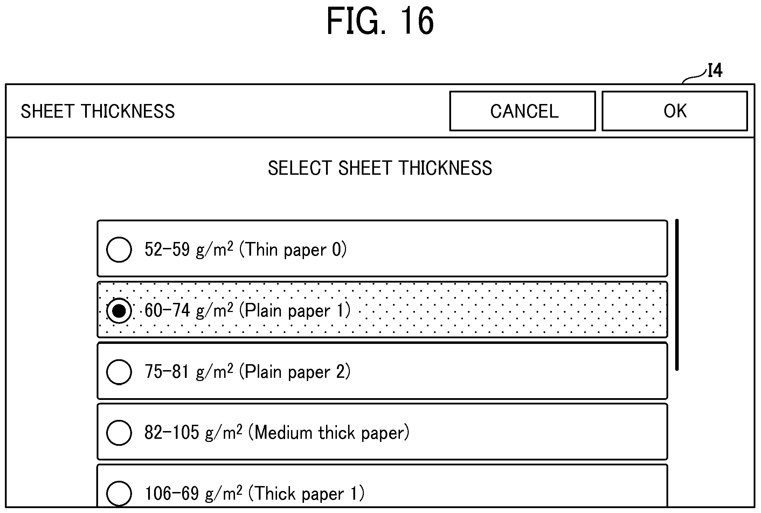

After the sheet type is selected by the operator, the manual feed setting unit 13 displays the sheet selection screen 14 (FIG. 16) for selecting the sheet thickness. The manual feed setting unit 13 displays, on the sheet selection screen 14, one or more sheet thickness included in the apparatus-dependent information corresponding to the use-set region as the candidate sheet thickness. The sheet selection screen 14 can be configured to display all of the sheet thickness stored in the apparatus-dependent information, or one or more of pre-set sheet thickness alone.

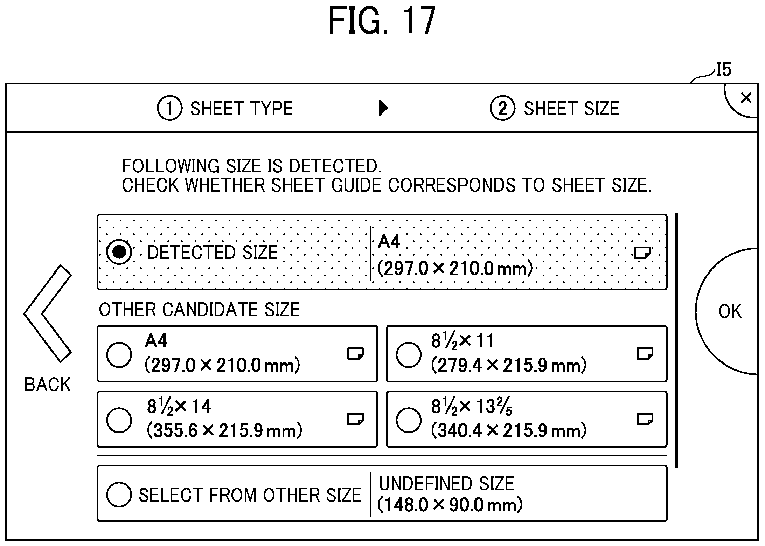

After the sheet thickness is selected by the operator, the manual feed setting unit 13 displays the sheet selection screen 15 used for selecting a standard size sheet (FIG. 17). The manual feed setting unit 13 displays, on the sheet selection screen 15, one or more estimated sheet sizes estimated by the manual feed setting unit 13 as the candidate sheet size. Specifically, the sheet selection screen 15 displays the sheet size displayed on the manual feed tray sheet setting screen 12 (FIG. 14) as "detected size" and the estimated sheet size as "other candidate size." Further, the sheet selection screen 15 (FIG. 17) displays a button of "select from other size" used for selecting a sheet size other than the candidate size. If the operator selects one of the displayed sheet sizes and presses the button of "OK," the manual feed setting unit 13 displays the manual feed tray sheet setting screen 12 (FIG. 14) reflecting the selection result

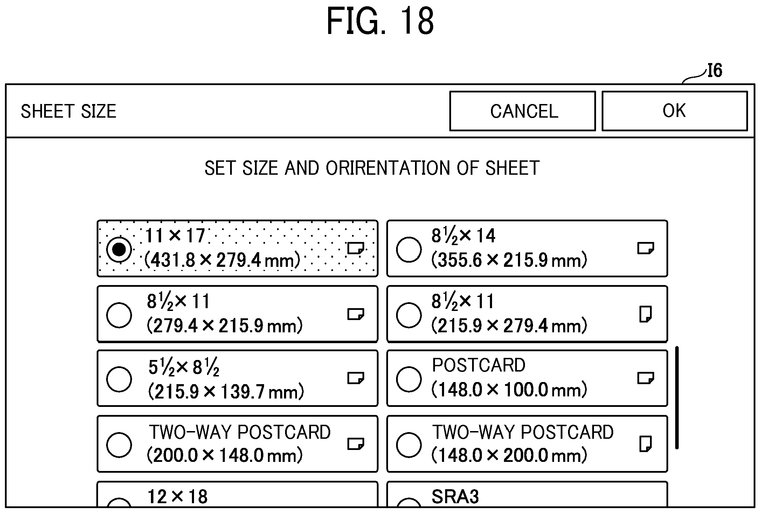

If the button of "select from other size" is selected by the operator on the sheet selection screen 15 (FIG. 17), the manual feed setting unit 13 displays the sheet selection screen 16 used for selecting the other standard size of the sheet (FIG. 18). The manual feed setting unit 13 displays, on the sheet selection screen 16, one or more standard sizes included in the apparatus-dependent information corresponding to the use-set region as the candidate sheet size. The sheet selection screen 16 (FIG. 18) can be configured to display all of the standard sizes stored in the apparatus-dependent information, or one or more of pre-set standard size. If the operator selects any one of the displayed sizes and presses the button of "OK," the manual feed setting unit 13 displays the manual feed tray sheet setting screen 12 (FIG. 14) reflecting the selection result.

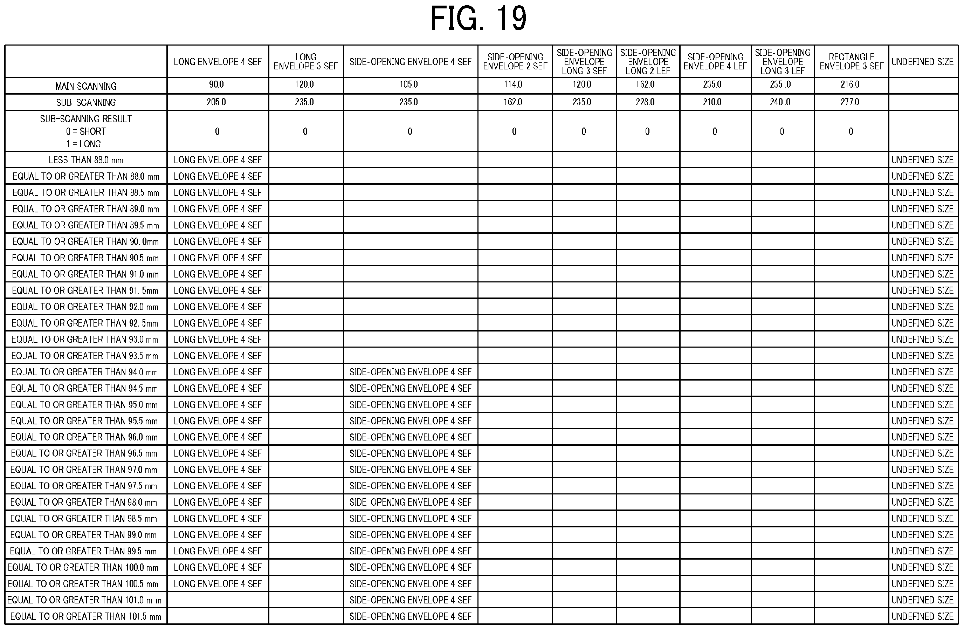

In the above description, a case that the sheet type is plain paper is described for the processing of the manual feed setting unit 13 when the button of "change setting" is pressed, but not limited thereto. For example, another sheet type, such as an envelope type, is to be described hereinafter. The manual feed setting unit 13 can retain the refining information on the envelope type indicated in FIG. 19 as the apparatus-dependent information corresponding to the use-set region. FIG. 19 is an example of the refining information used for refining the size of envelope when the use region is Japan. The manual feed setting unit 13 estimates the standard size of envelope type sheet based on the refining information on the envelope type and the width size and the length size of the sheet.

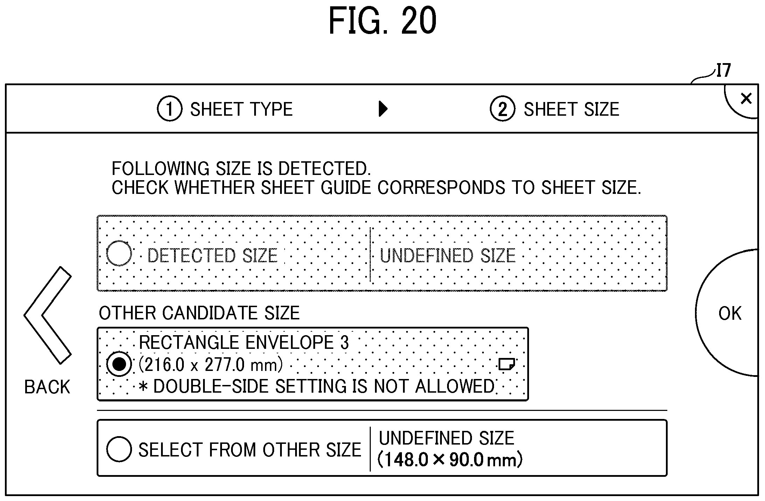

For example, if the button of "setting change" is pressed on the manual feed tray sheet setting screen 12 (FIG. 14) displaying the size field with "undefined" and then the envelope is selected on the sheet selection screen 13 (FIG. 15), the manual feed setting unit 13 displays, for example, a sheet selection screen 17 indicating the size of the envelope as other candidate size as indicated in FIG. 20. FIG. 20 is an example of an operation screen used for selecting the sheet for the image forming apparatus 1 when the sheet type is envelope. In this example case, the manual feed setting unit 13 displays one or more estimated sheet sizes of the envelope estimated by the manual feed setting unit 13 as the candidate sheet size on the sheet selection screen 17 (FIG. 20).

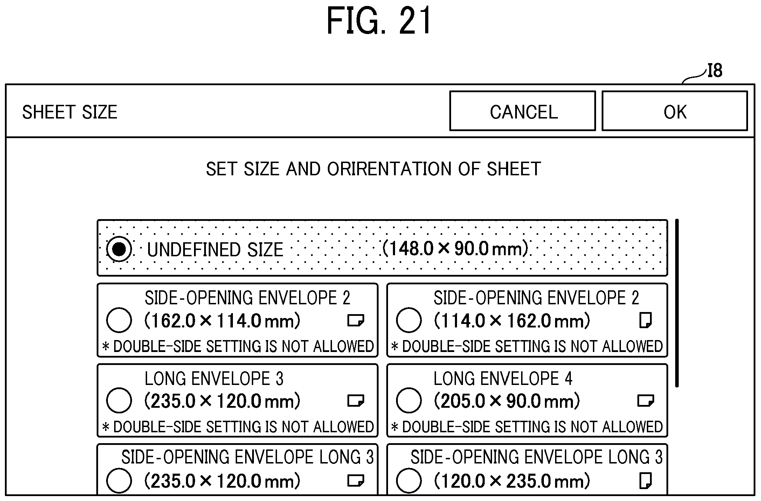

Further, if the button of "select from other size" is selected by the operator on the sheet selection screen 17 (FIG. 20), the manual feed setting unit 13 displays, for example, a sheet selection screen 18 used for selecting the size of another envelope as indicated in FIG. 21. FIG. 21 is another example of an operation screen used for selecting the sheet for the image forming apparatus 1 when the sheet type is envelope. The manual feed setting unit 13 displays one or more sizes of the envelope included in the apparatus-dependent information corresponding to the use-set region.

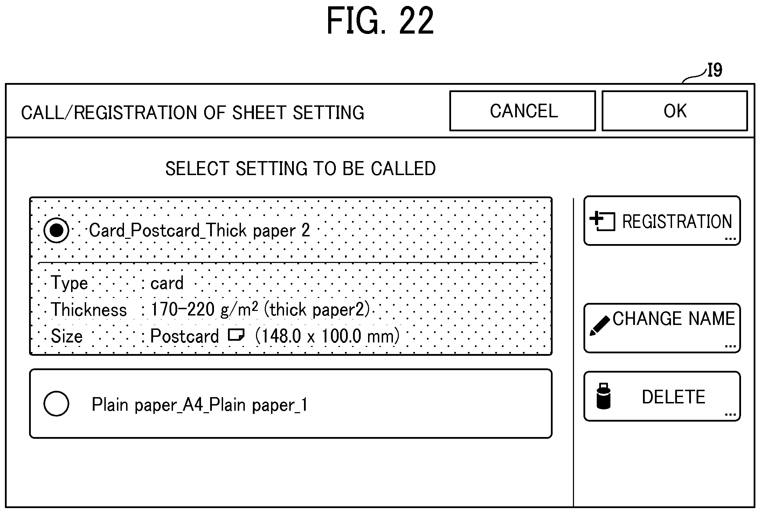

Further, if the button of "call/registration of sheet setting" is pressed on the manual feed tray sheet setting screen 12 (FIG. 14), the manual feed setting unit 13 instructs the display unit 12 to display a call/registration screen 19 used for the sheet setting as indicated in FIG. 22.

FIG. 22 is an example of an operation screen used for calling and registering the sheet settings for the image forming apparatus 1 according to the first embodiment. The call/registration screen 19 (FIG. 22) displays, for example, one or more combinations of sheet type, sheet thickness, and sheet size, which are registered in advance. Further, if the button of "call/registration of sheet setting" (FIG. 14) is pressed after changing the settings using the sheet selection screens 13 to 16 (FIGs. 15 to 18), the manual feed setting unit 13 displays, on the call/registration screen 19, the combination of sheet type, sheet thickness and sheet size corresponding to the changed settings. If the operator presses the button of "registration" on the call/registration screen 19 (FIG. 22), the manual feed setting unit 13 saves the combination in association with the width size and length size of the sheet used for estimating the sheet size before changing the settings.

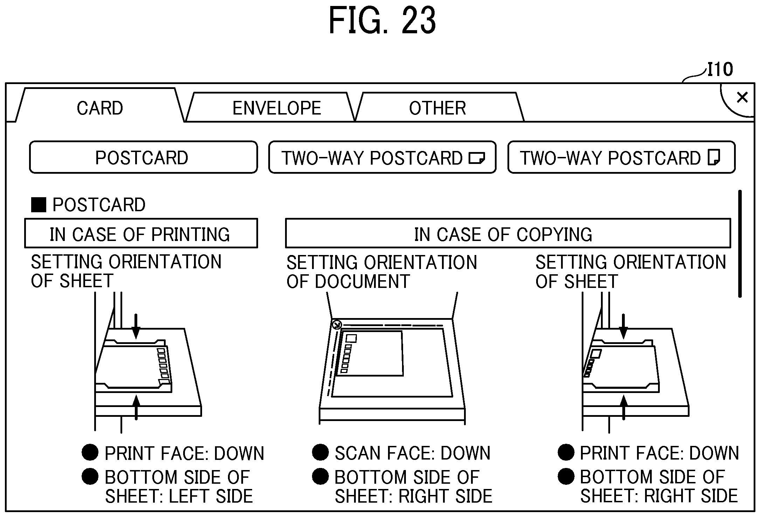

Further, if the button of "sheet setting method" is pressed on the manual feed tray sheet setting screen 12 (FIG. 14), the manual feed setting unit 13 instructs the display unit 12 to display a guidance screen 110 indicating the sheet setting method as indicated in FIG. 23.

FIG. 23 is an example of the guidance screen 110 used for guiding the sheet setting method for the image forming apparatus 1 according to the first embodiment. For example, the guidance screen 110 (FIG. 23) displays a sheet setting specification for postcard, envelope, and another sheet. The sheet setting specification includes, for example, a position of a bottom side of sheet indicating the set direction of sheet, top/down positions of scan face, and opening and closing state of a flap of envelope at the time of the setting. Further, the sheet setting specification is displayed for each sheet for each of printing cases, such as copying and printing. The manual feed setting unit 13 can be configured to acquire information used for displaying the guidance from the apparatus-dependent information corresponding to the use-set region and retain the information used for displaying the guidance in a storage device such as the RAM 123.

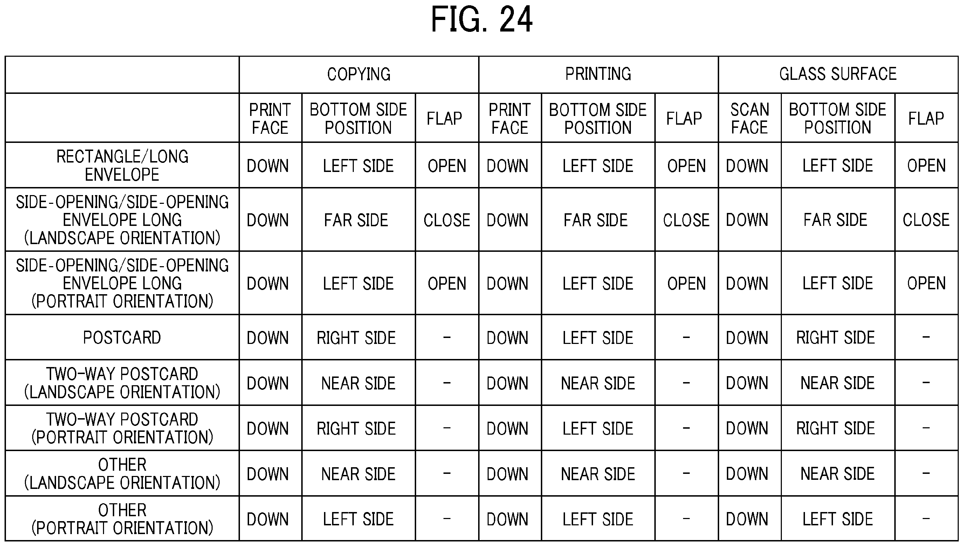

FIG. 24 is an example of information used for displaying the guidance used for the sheet setting method. As indicated in FIG. 24, the manual feed setting unit 13 retains the sheet setting specification for each operation such as copying and printing and for each sheet type, which is to be displayed as the guidance information. Further, in a case of copying, the sheet setting specification for the face setting of a copy-source sheet onto a glass face for scanning the copy-source sheet can also be retained. The information indicated in FIG. 24 is included in the apparatus-dependent information. The manual feed setting unit 13 can acquire the information indicated in FIG. 24 from the apparatus-dependent information corresponding to the use-set region when the manual feed application is activated for the first time.

As above described, the image forming apparatus 1 according to the first embodiment includes the display unit 12 and the manual feed unit 40. The image forming apparatus 1 includes the first detection unit 45, the second detection unit 46, the apparatus-dependent information storage unit 63, and the candidate display control unit 13ab. The first detection unit 45 detects the first size of the sheet, which is the size in a first direction corresponding to the direction D1 of the sheet placed on the manual feed unit 40. The second detection unit 46 detects the second size of the sheet, which is the size in a second direction corresponding to the direction D2 of the sheet placed on the manual feed unit 40, in which the second direction is different from the first direction. The apparatus-dependent information storage unit 63 stores the priority setting information used preferentially by the image forming apparatus 1. The candidate display control unit 13ab estimates at least one candidate size for the sheet based on the first size, the second size and the priority setting information, and displays at least one candidate size using the display unit 12 as the candidate sheet size. For example, the priority setting information can include information on the region where the image forming apparatus 1 is used.

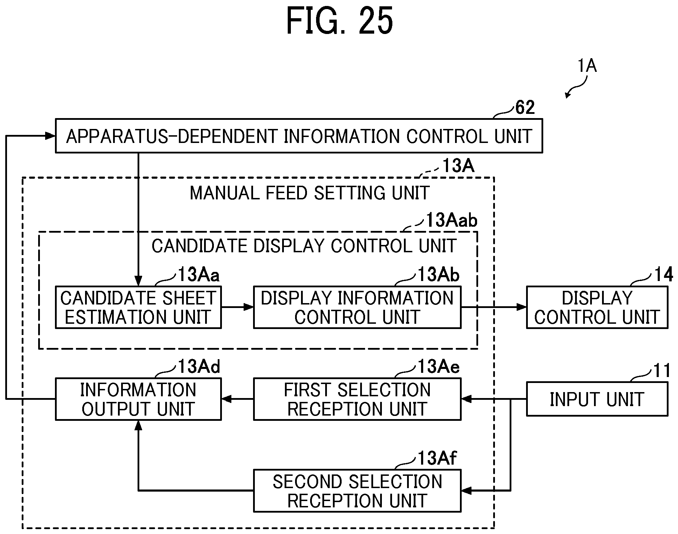

In the above described configuration, the image forming apparatus 1 can estimate the shape and size of the sheet from the first size and the second size, and can estimate the candidate sheet size corresponding to the priority setting information, such as the use region, preferentially used by the image forming apparatus 1, from the sheet shape, sheet size, and the priority setting information on the sheet. Therefore, the image forming apparatus 1 can present the sheet size corresponding to the priority setting information, for the sheet placed on the manual feed unit 40. Second Embodiment:
Hereinafter, a description is given of an image forming apparatus 1A according to a second embodiment with reference to FIG. 25. The image forming apparatus 1A receives a selection from the presented (e.g., displayed) candidate size or an input of an arbitrary size with respect to the sheet placed on the manual feed unit 40. The second embodiment will be described below with respect to the first embodiment, and the description of the same points as in the first embodiment will be omitted as appropriate.

FIG. 25 is an example block diagram of a functional configuration of a manual feed setting unit 13A of the image forming apparatus 1A according to the second embodiment. The functional configuration of the image forming apparatus 1A of the second embodiment is the same as the functional configuration of the image forming apparatus 1 of the first embodiment except the manual feed setting unit 13A. The hardware configuration of the image forming apparatus 1A of the second embodiment is the same as the hardware configuration of the image forming apparatus 1 of the first embodiment.

As indicated in FIG. 25, the manual feed setting unit 13A includes, for example, a candidate display control unit 13Aab, an information output unit 13Ad, a first selection reception unit 13Ae, and a second selection reception unit 13Af. The candidate display control unit 13Aab includes, for example, a candidate sheet estimation unit 13Aa and a display information control unit 13Ab.

The candidate sheet estimation unit 13Aa outputs, to the display information control unit 13Ab, the estimated sheet size and a list of standard sheet size included in the apparatus-dependent information corresponding to the use-set region (hereinafter, "sheet size list").

The display information control unit 13Ab outputs the estimated sheet size and the sheet size list to the display control unit 14. The display information control unit 13Ab can output the estimated sheet size and the sheet size list as one list to the display control unit 14, and can instruct the display control unit 14 to simultaneously display the estimated sheet size and the sheet size list. Alternatively, the display information control unit 13Ab can output the estimated sheet size and the sheet size list as separated lists such as two separated lists, and can instruct the display control unit 14 to display the estimated sheet size or the sheet size list selectively based on a selection input via the input unit 11.

When an estimated sheet size is selected from the standard size of the sheet displayed on the display unit 12 by an operator's selection operation via the input unit 11, the first selection reception unit 13Ae acquires the selected estimated sheet size, and then outputs the selected estimated sheet size to the information output unit 13Ad and the display information control unit 13Ab. In other words, the first selection reception unit 13Ae receives at least one estimated sheet size of the sheet selected by the operator.

When a sheet size is selected from the sheet size list of standard size sheet displayed on the display unit 12 by the operator's selection operation via the input unit 11, the second selection reception unit 13Af acquires the selected sheet size, and outputs the selected sheet size to the information output unit 13Ad and the display information control unit 13Ab. In other words, the second selection reception unit 13Af receives the selection of arbitrary size of the sheet by the operator.

The information output unit 13Ad outputs the information acquired from the first selection reception unit 13Ae or the information acquired from the second selection reception unit 13Af to the apparatus-dependent information control unit 62.

The other configuration and operation of the image forming apparatus 1A according to the second embodiment are the same as those in the first embodiment, and therefore the description thereof will be omitted. As to the image forming apparatus 1A according to the second embodiment, the same effect as that of the first embodiment can be attained.

Further, the image forming apparatus 1A according to the second embodiment includes the first selection reception unit 13Ae used for receiving a selection by a user from at least one candidate size of the sheet displayed on the display unit 12, and the second selection reception unit 13Af used for receiving a selection of an arbitrary size of the sheet by the user. According to the above configuration of the second embodiment, if the user knows the size of the sheet placed on the manual feed unit 40, the size setting of sheet can be become simpler and reliable.

The image forming apparatus 1A according to the second embodiment displays the estimated sheet size and the sheet size list on the display unit 12, but not limited to thereto. The image forming apparatus 1A can be configured to display the estimated sheet size using the display unit 12, and display an input field used for receiving an input of any standard sheet size by an operator's key input operation, using the display unit 12, with which the image forming apparatus 1A can be configured to receive the estimated sheet size or the input sheet size.

### Third Embodiment:

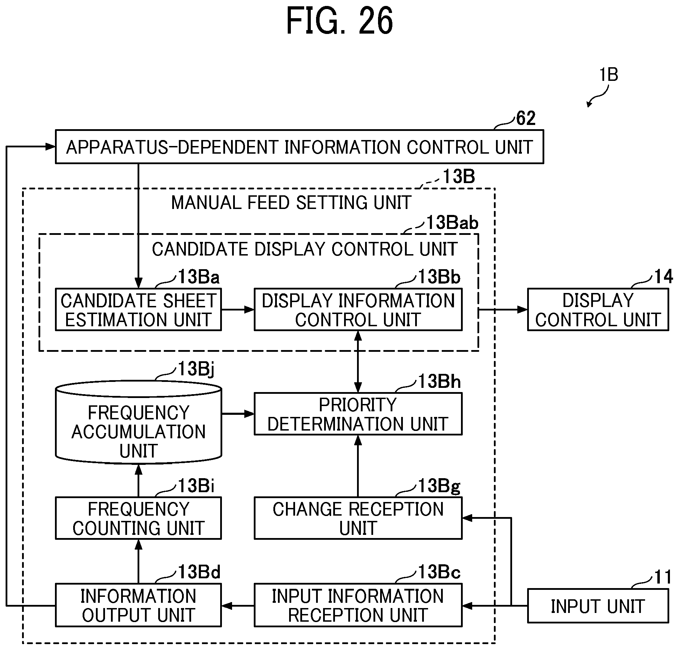

Hereinafter, a description is given of an image forming apparatus 1B according to a third embodiment with reference to FIGs. 26, 27 and 28. The image forming apparatus 1B determines the priority level of the candidate of the estimated sheet size for the sheet placed on the manual feed unit 40 in accordance with a use frequency (usage frequency) of sheet size selected by an operator in the past or previous printing operation, and presents the candidate of the estimated sheet size with displaying an indication of the priority level. Hereinafter, the third embodiment will be described with reference to the points different from those in the first and second embodiments, and the description of the points similar to those in the first and second embodiments will be omitted as appropriate.

FIG. 26 is an example block diagram of a functional configuration of a manual feed setting unit 13B of the image forming apparatus 1B according to the third embodiment. The functional configuration of the image forming apparatus 1B according to the third embodiment is the same as the functional configuration of the image forming apparatus 1 of the first embodiment except the manual feed setting unit 13B. The hardware configuration of the image forming apparatus 1B according to the third embodiment is the same as the hardware configuration of the first embodiment, but the manual feed setting unit 13B may further include, for example, a memory as in the same manner as the engine unit 50 and the main control unit 60.

As indicated in FIG. 26, the manual feed setting unit 13B includes, for example, a candidate display control unit 13Bab, an input information reception unit 13Bc, an information output unit 13Bd, a change reception unit 13Bg, a priority determination unit 13Bh, a frequency counting unit 13Bi, and a frequency accumulation unit 13Bj. The candidate display control unit 13Bab includes, for example, a candidate sheet estimation unit 13Ba and a display information control unit 13Bb.

The change reception unit 13Bg receives a change to the priority level of the estimated sheet size displayed on the display unit 12 via the input unit 11. The change reception unit 13Bg outputs the received change of the priority level to the priority determination unit 13Bh.

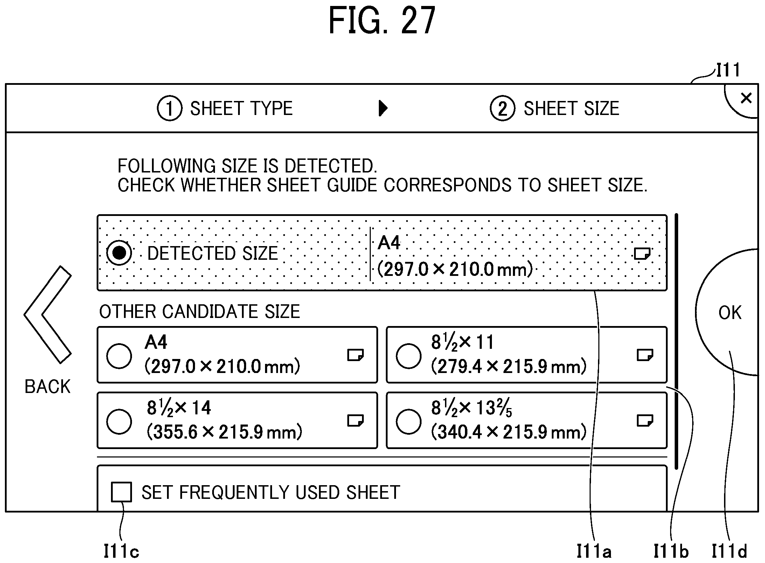

FIG. 27 is an example of a sheet selection screen used for selecting a standard sheet size according to the third embodiment. In a sheet selection screen I11 of FIG. 27, an estimated sheet size I11a (e.g., "A4") set with the highest priority level is displayed at the top, and a list I11b of the estimated sheet size is displayed below the estimated sheet size I11a. The estimated sheet size in the list I11b can be arranged in the descending order of the priority level. Further, a field I11c used for determining a sheet size settable with a higher priority level is displayed below the list I11b. If any one of the estimated sheet size in the list I11b is selected and the field I11c is selected and then the button I11d of "OK" is pressed, the selected estimated sheet size is received by the change reception unit 13Bg as the sheet size having the highest priority level. The change reception unit 13Bg is used as an example of a priority level reception unit.

The frequency accumulation unit 13Bj accumulates or stores the frequency of the sheet size used or selected in the past or previous printing operation using the manual feed unit 40 for each sheet size. In other words, the frequency accumulation unit 13Bj accumulates or stores the use frequency of the sheet size selected by an operator in the past or previous printing operation. For example, the use frequency can be the number of times that a given sheet size was selected on the manual feed tray sheet setting screen 12 (FIG. 14) and the operation screens used for changing the sheet settings (FIGs. 15 to 18), respectively. Alternatively, the use frequency can be the number of times that the sheet size was used in the past or previous printing operation using the manual feed unit 40, or can be the number of printed sheets using the manual feed unit 40. An example of the frequency determination period can be a time period from a given time specified by the input unit 11 to the current time, or a time period from the current time to a given time in the past.

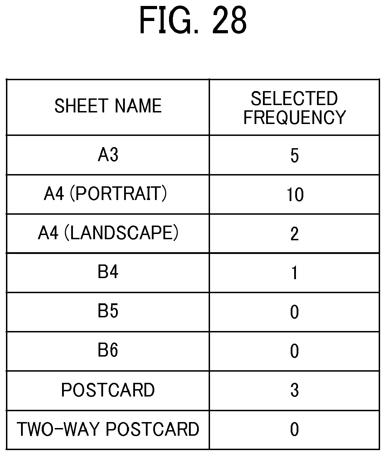

As indicated in FIG. 28, the frequency accumulation unit 13Bj accumulates or stores the name of sheet corresponding to the sheet size and the number of selected times in association with each other, respectively indicated as the sheet name and the selected frequency in FIG. 28. FIG. 28 is an example of information stored in the frequency accumulation unit 13Bj according to the third embodiment. The frequency accumulation unit 13Bj can be implemented by a memory, such as a non-volatile memory.

The frequency counting unit 13Bi acquires information on the sheet size, which was used for the past or previous printing operation from the information output unit 13Bd with respect to the sheet placed on the manual feed unit 40. Further, the frequency counting unit 13Bi refers to the frequency accumulation unit 13Bj each time information on the sheet size is acquired, and increments the number of selected times of the acquired sheet size by one to update the accumulated number of the selected times.

The priority determination unit 13Bh determines the priority level among the estimated sheet sizes based on the use frequency (or selected frequency) of the sheet size stored in the frequency accumulation unit 13Bj. Specifically, the priority determination unit 13Bh acquires the estimated sheet sizes from the display information control unit 13Bb. Further, the priority determination unit 13Bh refers to the frequency accumulation unit 13Bj to acquire the number of selected times of each of the estimated sheet sizes. The priority determination unit 13Bh determines the estimated sheet size having the greatest number of selected times, among the estimated sheet sizes, as the sheet size having the highest priority level. Further, among the other estimated sheet sizes, not selected as the sheet size having the highest priority level, the priority determination unit 13Bh can determine the priority level in the descending order of the number of selected times (i.e., from greater to smaller priority level).

Further, if the priority determination unit 13Bh acquires information on the sheet size having the higher priority level that is designated by an operator, from the change reception unit 13Bg, the priority determination unit 13Bh determines the designated sheet size as the sheet size having the highest priority level without applying the number of selected times. The priority determination unit 13Bh outputs the determination result to the display information control unit 13Bb.

The display information control unit 13Bb displays the estimated sheet size acquired from the candidate sheet estimation unit 13Ba using the display unit 12 with displaying an indication of the priority level. For example, as indicated in FIG. 27, the display information control unit 13Bb can highlight a display of the sheet size having the highest priority level among the estimated sheet sizes (see dotted area in FIG. 27). Further, the display information control unit 13Bb can display other estimated sheet sizes in the descending order of the priority level (i.e., from greater to smaller priority level).

The information output unit 13Bd outputs the information on the sheet placed on the manual feed unit 40, selected via the input unit 11, to the apparatus-dependent information control unit 62 and the frequency counting unit 13Bi.

The other configuration and operation of the image forming apparatus 1B according to the third embodiment are the same as those in the first and second embodiments, and therefore the description thereof will be omitted. As to the image forming apparatus 1B according to the third embodiment, the same effect as that of the first embodiment can be attained.

Further, the image forming apparatus 1B according to the third embodiment includes the frequency accumulation unit 13Bj which stores the use frequency of the sheet size selected by a user, and the priority determination unit 13Bh that determines the priority level of at least one candidate size for the sheet placed on the manual feed unit 40 based on the use frequency. The manual feed setting unit 13A can display at least one candidate size using the display unit 12 with displaying an indication of the priority level. As to the above configuration of the third embodiment, the user can easily select the size of sheet placed on the manual feed unit 40 from the candidate size of the sheet displayed on the display unit 12.

The image forming apparatus 1B according to the third embodiment further includes the change reception unit 13Bg serving as a priority level reception unit used for receiving the priority level setting of the sheet size from a user, and the manual feed setting unit 13B can determine the priority level of at least one candidate size of the sheet by prioritizing a given priority level (another priority level) set by the user over the priority level determined by the use frequency of sheet size in the past or previous printing operation. As to the above configuration of the third embodiment, the image forming apparatus 1B can reflect the priority level set by the user more preferentially and then present the candidate size of the sheet to the user. Therefore, the user can easily select the size of sheet placed on the manual feed unit 40 from the candidate size of the sheet displayed on the display unit 12.

As to the image forming apparatus according 1B to the third embodiment, the frequency accumulation unit 13Bj accumulates the use frequency of sheet size in the past or previous printing operation with respect to the sheet placed on the manual feed unit 40, but not limited thereto. The frequency accumulation unit 13Bj can accumulate the use frequency of the sheet size in the past or previous printing operation with respect to the sheet placed on the manual feed unit 40 and the sheet feed unit 36. Then, the manual feed setting unit 13B can apply the use frequency of the sheet size in the past or previous printing operation.

### Fourth Embodiment:

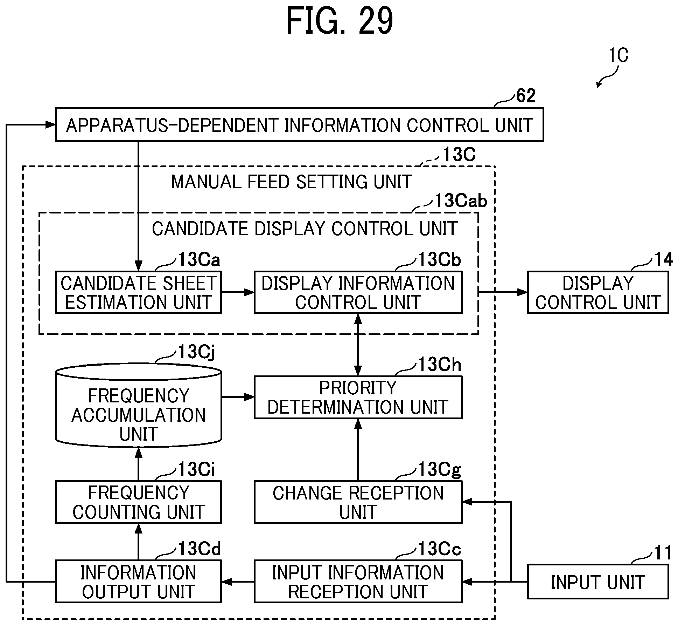

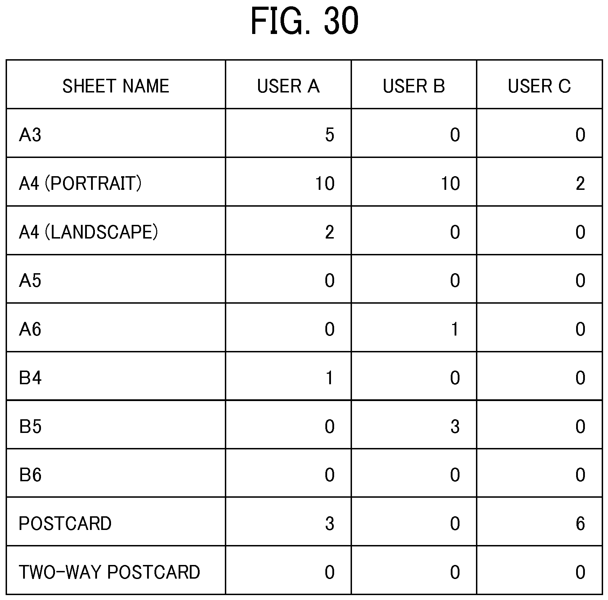

Hereinafter, a description is given of an image forming apparatus 1C according to a fourth embodiment with reference to FIGs. 29 and 30. The image forming apparatus 1C according to the fourth embodiment determines the priority level of the candidates of the estimated sheet sizes in accordance with the use frequency of sheet size selected by each individual operator in the past or previous printing operation for the sheet placed on the manual feed unit 40, and presents the candidates of estimated sheet sizes with displaying an indication of the priority level. Hereinafter, the fourth embodiment will be described with reference to the points different from the first to third embodiments, and description of the same points as those in the first to third embodiments will be omitted as appropriate.

FIG. 29 is an example block diagram of a functional configuration of a manual feed setting unit 13C of the image forming apparatus 1C according to the fourth embodiment. The functional configuration and the hardware configuration of the image forming apparatus 1C according to the fourth embodiment are the same as those in the third embodiment.

As indicated in FIG. 29, the manual feed setting unit 13C according to the fourth embodiment includes the same components as the manual feed setting unit 13B according to the third embodiment. Specifically, the manual feed setting unit 13C includes, for example, a candidate display control unit 13Cab, an input information reception unit 13Cc, an information output unit 13Cd, a change reception unit 13Cg, a priority determination unit 13Ch, a frequency counting unit 13Ci, and a frequency accumulation unit 13Cj. The candidate display control unit 13Cab includes, for example, a candidate sheet estimation unit 13Ca and a display information control unit 13Cb.

The change reception unit 13Cg receives a change to the priority level of the estimated sheet size displayed on the display unit 12 via the input unit 11. Further, the change reception unit 13Cg acquires information on one or more users of the image forming apparatus 1C based on an input via the input unit 11 as user information. The change reception unit 13Cg associates the received change of the priority level and the user information, and outputs the received change of the priority level and the user information to the priority determination unit 13Ch. The user information represents information on the one or more users of the image forming apparatus 1C.

The input information reception unit 13Cc acquires and retains the user information related to the one or more users of the image forming apparatus 1C based on the input via the input unit 11. The input information reception unit 13Cc acquires information on the sheet, such as sheet size, which is used for the printing operation, based on the input via the input unit 11 with respect to the sheet placed on the manual feed unit 40 as the sheet-related information, and associates the sheet-related information and the user information, and outputs the sheet-related information and the user information to the information output unit 13Cd. The input information reception unit 13Cc is used as an example of a user information reception unit.

The information output unit 13Cd outputs the sheet-related information and the user information acquired from the input information reception unit 13Cc to the frequency counting unit 13Bi, and outputs the sheet-related information to the apparatus-dependent information control unit 62.

The frequency accumulation unit 13Cj accumulates or stores the frequency of the sheet size used in the past or previous printing operation using the manual feed unit 40 for each user and each sheet size. In other words, the frequency accumulation unit 13Cj retains the sheet size list corresponding to each user. The frequency determination period is the same as the frequency determination period in the third embodiment. As indicated in FIG. 30, the frequency accumulation unit 13Cj accumulates or stores, for each user, the name of sheet corresponding to the sheet size and the number of selected times in association with each other. FIG. 30 is an example of information stored in the frequency accumulation unit 13Cj according to the fourth embodiment.

The frequency counting unit 13Ci acquires the information on the sheet size used in the past or previous printing operation and the information on the user designating the sheet size used in the past or previous printing operation with respect to the sheet placed on the manual feed unit 40, from the information output unit 13Cd. The frequency counting unit 13Ci refers to the frequency accumulation unit 13Cj each time the information on the sheet size is acquired, and increments the number of selected times of the sheet size by one and increments the number of selected times of the user information by one to update the accumulated number of the selected times.

The priority determination unit 13Ch determines the priority level of the estimated sheet size in accordance with the use frequency of the sheet size selected by each user, stored or accumulated in the frequency accumulation unit 13Cj. Specifically, the priority determination unit 13Ch acquires the estimated sheet size from the display information control unit 13Cb and acquires the user information from the input information reception unit 13Cc. Further, the priority determination unit 13Ch refers to the frequency accumulation unit 13Cj to acquire the number of selected times of the estimated sheet size for the concerned user. The priority determination unit 13Ch determines the estimated sheet size having the greatest number of selected times among the estimated sheet sizes as the sheet size having the highest priority level for the concerned user. Among the other estimated sheet sizes, not selected as the sheet size having the highest priority level, the priority determination unit 13Ch can determine the priority level in the descending order of the number of selected times (i.e., from greater to smaller priority level).

Further, if the priority determination unit 13Ch acquires information on the sheet size having the highest priority designated for the concerned user from the change reception unit 13Cg, the priority determination unit 13Ch determines the designated sheet size as the sheet size having the highest priority level without applying the number of selected times such as the use frequency. The priority determination unit 13Ch outputs the determination result to the display information control unit 13Cb.

The display information control unit 13Cb displays the estimated sheet size acquired from the candidate sheet estimation unit 13Ca using the display unit 12 with displaying an indication of the priority level.

The other configuration and operation of the image forming apparatus 1C according to the fourth embodiment are the same as those in the first to third embodiments, and therefore the description thereof will be omitted. As to the image forming apparatus 1C according to the fourth embodiment, the same effect as that of the third embodiment can be attained.

Further, the image forming apparatus 1C according to the fourth embodiment includes the input information reception unit 13Cc as a user information reception unit used for receiving the input of the user information, and the frequency accumulation unit 13Cj as a retaining unit used for retaining a list of candidate sheet sizes corresponding to each user. The manual feed setting unit 13C can refer to the list of candidate sheet sizes corresponding to the user information received by the input information reception unit 13Cc to display at least one candidate size of the sheet included in the list of candidate sheet sizes on the display unit 12. As to the above configuration of the fourth embodiment, the image forming apparatus 1C can present the candidate size of the sheet corresponding to each user. Therefore, the user can easily select the size of sheet placed on the manual feed unit 40 from the candidate size of the sheet displayed on the display unit 12.

As to the image forming apparatus according 1C to the fourth embodiment, the frequency accumulation unit 13Cj accumulates or stores the sheet size and the use frequency set for each user as the list of candidate size of the sheet, but not limited thereto. For example, the list of candidate size of the sheet may include only usable sheet size or to-be-used sheet size set for each user. In this case, among the estimated sheet sizes acquired from the display information control unit 13Cb, the priority determination unit 13Ch can determine the estimated sheet size included in the list as the sheet size having the higher or highest priority level.

### Fifth Embodiment:

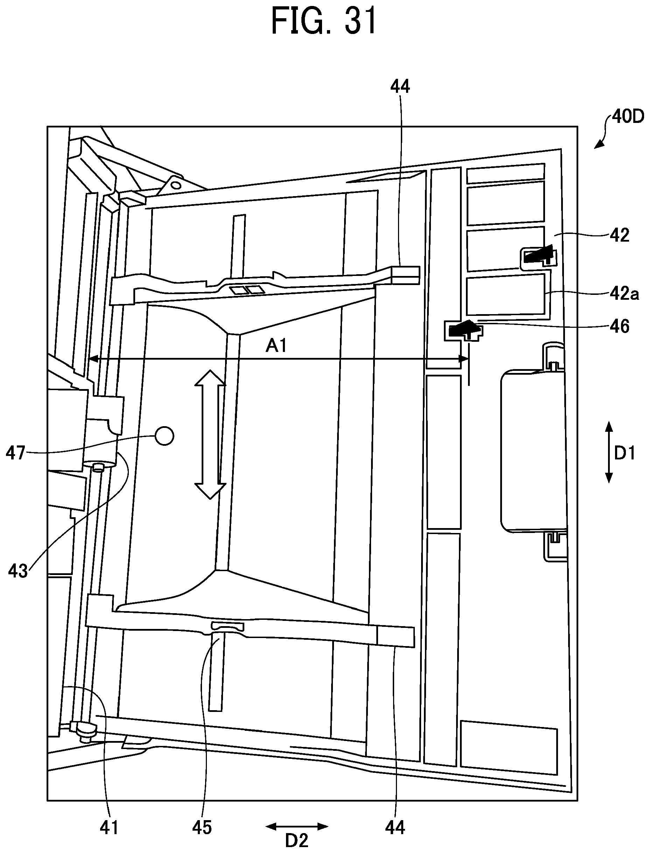

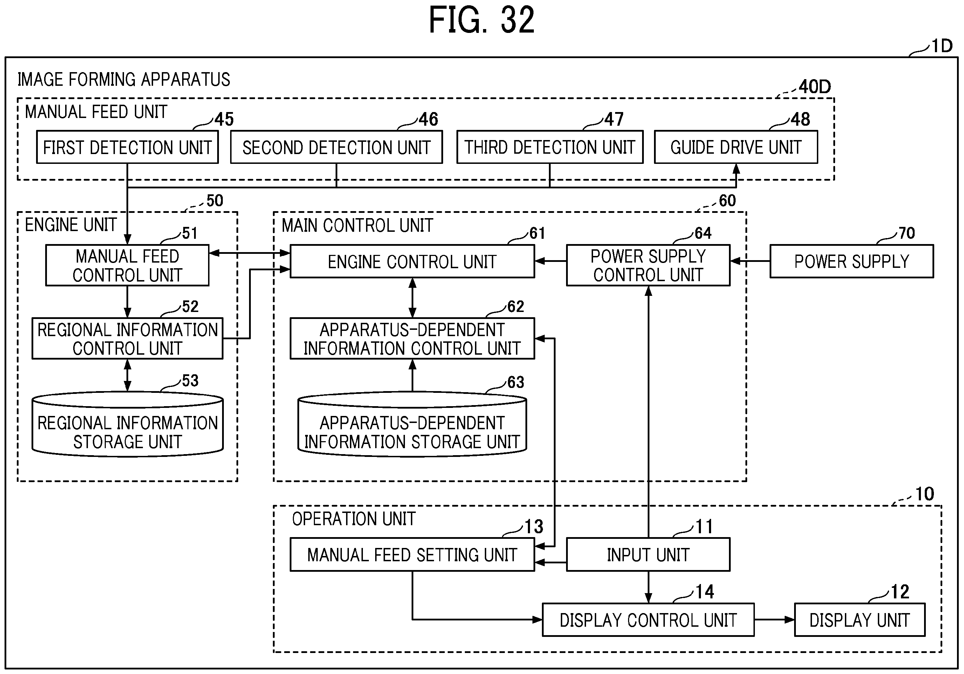

Hereinafter, a description is given of an image forming apparatus 1D according to a fifth embodiment with reference to FIGs. 31 and 32. The image forming apparatus 1D according to the fifth embodiment can automatically detect a size of sheet placed on the manual feed tray 42. Hereinafter, the fifth embodiment will be described with reference to the points different from the first to fourth embodiments, and description of the same points as those in the first to fourth embodiments will be omitted as appropriate.

FIG. 31 is an example plan view of a manual feed unit 40D of the image forming apparatus 1D according to the fifth embodiment. FIG. 32 is an example block diagram of a functional configuration of the image forming apparatus 1D according to the fifth embodiment. The functional configuration of the image forming apparatus 1D is the same as the functional configuration of the image forming apparatus 1 of the first embodiment (FIG. 3) except for the manual feed unit 40D.

As indicated in FIGs. 31 and 32, the manual feed unit 40D further includes a third detection unit 47 disposed between the two guide plates 44 on the manual feed tray 42 in addition to the configuration of the manual feed unit 40 of the first embodiment (FIG. 3). The third detection unit 47 detects whether or not a sheet exists on the third detection unit 47. The third detection unit 47 is preferably disposed near the center portion between the two guide plates 44 and near the manual feed port 41 to detect any sheet placed between the two guide plates 44. The configuration of the third detection unit 47 can employ the configuration of the second detection unit 46. The third detection unit 47 outputs the detection result to the manual feed control unit 51.

The manual feed unit 40D further includes a guide drive unit 48 (FIG. 32) used for moving the two guide plates 44 into the direction D1. The guide drive unit 48 includes, for example, an actuator and a drive mechanism. The drive mechanism is operated by a drive force of the actuator to move the two guide plates 44 along the direction D1. The actuator is controlled by the manual feed control unit 51.

When the manual feed control unit 51 acquires the detection result from the third detection unit 47, the manual feed control unit 51 operates the guide drive unit 48 to move the two guide plates 44 toward each other. When the manual feed control unit 51 detects a contact of the two guide plates 44 to the sheet placed on the manual feed unit 40D, the manual feed control unit 51 stops the guide drive unit 48. Specifically, when the manual feed control unit 51 detects the contact of the two guide plates 44 to the sheet continuously for a given period of time or more, the manual feed control unit 51 stops the guide drive unit 48. For example, the manual feed control unit 51 can detect the contact between the guide plates 44 and the sheet using a contact sensor placed on the guide plate 44, or can detect the contact between the guide plate 44 and the sheet by checking a load of the actuator of the guide drive unit 48.

After stopping the guide drive unit 48, the manual feed control unit 51 activates the first detection unit 45 and the second detection unit 46 to detect the size of the sheet.

If the existence of sheet on the manual feed tray 42 is not detected by the third detection unit 47, the manual feed control unit 51 can move the two guide plates 44 in a direction that the two guide plates 44 are farther away from each other, and wait. In this case, the space interval between the two guide plates 44 can be equal to or greater than the maximum spacing of the two guide plates 44 or the maximum width of sheet that may be set on the manual feed tray 42. With this configuration, a new sheet can be put on the manual feed tray 42 easily.

The hardware configuration of the image forming apparatus 1D according to the fifth embodiment is the same as that of the first embodiment except for the manual feed unit 40D. The manual feed unit 40D includes, for example, the first detection unit 45, the second detection unit 46, the third detection unit 47, the actuator of the guide drive unit 48, and the sensor for detecting the contact between the guide plate 44 and the sheet, which are connected to with each other via a bus.

The other configuration and operation of the image forming apparatus 1D according to the fifth embodiment are the same as those in the first to fourth embodiments, and therefore the description thereof will be omitted. As to the image forming apparatus 1D according to the fifth embodiment, the same effect as that of the first embodiment can be attained. Further, as to the image forming apparatus 1D according to the fifth embodiment, the printing operation using the manual feed unit 40D can be performed easily.

Although the embodiments of the present invention have been described as above, the present invention is not limited to the embodiments described above. That is, various modifications and improvements can be made within the scope of the present invention. For example, a configuration in which various variations can be implemented in the embodiments and a combination of components in different embodiments can be also included within the scope of the present invention.

For example, in the image forming apparatuses according to the above described embodiments, the manual feed setting unit performs each processing via the display screen and the input operation using the operation unit 10, but not limited thereto. For example, the manual feed setting unit can perform each processing via a display screen and an input operation using an external apparatus connected to the computer apparatus 2 and/or the PBX 3 connected to the image forming apparatus.

Further, the present invention can be devised as a method of feeding a recording medium. For example, the method of feeding the recording medium is performed using a recording medium feed apparatus having a manual feed unit. The method includes detecting a first size corresponding to a size in a first direction of the recording medium placed on the manual feed unit, detecting a second size corresponding to a size in a second direction of the recording medium placed on the manual feed unit, the second direction being different from the first direction, acquiring priority setting information, which is to be preferentially used for the recording medium feed apparatus, estimating at least one candidate size of the recording medium based on the first size, the second size, and the priority setting information, and displaying, on a display, the at least one candidate size as a candidate size of the recording medium. As to the method of feeding the recording medium, the same effect as that of the recording medium feed apparatus can be attained. The method of feeding the recording medium can be implemented by one or more circuits such as CPU and LSI, an integrated circuit (IC) card or a single module.

Typically, image forming apparatuses are used in various regions of the world by moving the image forming apparatuses among the various regions while standard size sheets used in each region, such as Japan, North America and Europe, are different. As to conventional image forming apparatuses, presenting standard sizes of various types of sheet to be set for the manual feed unit in accordance with preferential settings for sheets, such as the use-region of image forming apparatuses, which is important for the image forming apparatuses disposed at a specific region, is difficult to perform.

The above described recording medium feed apparatus and method of feeding the recording medium can present a size of recording medium based on the priority setting information of sheet.

The numerical values described in the above embodiments, such as numbers and quantities, are all illustrated in detail to describe the technology of the present invention, but the present invention is not limited to the above described numerical values. Further, the connection relationship between the components is illustrated in detail to describe the technology of the present invention, but the connection relationship to implement the functions of the present invention is not limited thereto.

Further, the division of units in the functional block diagram described in the above is just examples. For example, a plurality of units can be implemented as one block, one unit can be divided into a plurality of units, and/or a part of the functions can be transferred to another block. Further, the functions of the plurality of units having similar functions can be processed, for example, by a single hardware or software in parallel or by a time division.

Each of the embodiments described above is presented as an example, and it is not intended to limit the scope of the present disclosure. Numerous additional modifications and variations are possible in light of the above teachings. It is therefore to be understood that, within the scope of the appended claims, the disclosure of this specification can be practiced otherwise than as specifically described herein. Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cashe memory of the CPU, and the RAM may function as a physical memory or a primary memory of the apparatus, while the HDD may function as a secondary memory of the apparatus.

## Claims

1. A recording medium feed apparatus (1) comprising:
a manual feed unit (40);
a first detection unit (45) configured to detect a first size corresponding to a size in a first direction of a recording medium placed on the manual feed unit (40);
a second detection unit (46) configured to detect a second size corresponding to a size in a second direction of the recording medium placed on the manual feed unit (40), the second direction being different from the first direction;
a storage unit (63) configured to store priority setting information, which is to be preferentially used for the recording medium feed apparatus (1); and
a candidate display control unit (13ab, 13Aab, 13Bab, 13Cab) configured to estimate at least one candidate size of the recording medium based on the first size, the second size, and the priority setting information, and to display the at least one candidate size, on a display (12), as a candidate size of the recording medium.

2. The recording medium feed apparatus (1) according to claim 1, further comprising:
a first selection reception unit (13Ae) configured to receive a selection of a size of the recording medium by a user, the size of the recording medium being selected by the user from the at least one candidate size of the recording medium displayed on the display, and
a second selection reception unit (13Af) configured to receive a selection of an arbitrary size of the recording medium by the user.

3. The recording medium feed apparatus (1) according to claim 1 or 2, further comprising:
a frequency accumulation unit (13Bj, 13Cj) configured to accumulate use frequency of a size of the recording medium selected by the user; and
a priority determination unit (13Bh, 13Ch) configured to determine a priority level of the at least one candidate size in accordance with the use frequency of the size of the recording medium,
wherein the candidate display control unit (13ab, 13Aab, 13Bab, 13Cab) displays the at least one candidate size on the display (12) with an indication of the priority level.

4. The recording medium feed apparatus (1) according to claim 3, further comprising:
a priority level reception unit (13Bg) configured to receive another priority level set by the user for a size of the recording medium,
wherein the priority determination unit (13Bh, 13Ch) is configured to determine the priority level of the at least one candidate size based on the another priority level set by the user instead of applying the priority level corresponding to the use frequency of the size of the recording medium.

5. The recording medium feed apparatus (1) according to any one of claims 1 to 4, further comprising:
a user information reception unit (13Cc) configured to receive an input of user information; and
a retaining unit (13Cj) configured to retain a list of candidate size of the recording medium corresponding to each user,
wherein the candidate display control unit (13ab, 13Aab, 13Bab, 13Cab) is configured to refer to the list of candidate size of the recording medium corresponding to the user information received by the user information reception unit (13Cc) to display the at least one candidate size included in the list on the display (12).

6. The recording medium feed apparatus (1) according to any one of claims 1 to 5,
wherein the priority setting information includes information on a region where the recording medium feed apparatus (1) is used.

7. A method of feeding a recording medium using a recording medium feed apparatus (1) having a manual feed unit (40), the method comprising:
detecting a first size corresponding to a size in a first direction of the recording medium placed on the manual feed unit (40);
detecting a second size corresponding to a size in a second direction of the recording medium placed on the manual feed unit (40), the second direction being different from the first direction;
acquiring priority setting information, which is to be preferentially used for the recording medium feed apparatus (1);
estimating at least one candidate size of the recording medium based on the first size, the second size, and the priority setting information; and
displaying, on a display (12), the at least one candidate size as a candidate size of the recording medium.

8. The method according to claim 7, further comprising:
receiving a selection of a size of the recording medium by a user, the size of the recording medium being selected by the user from the at least one candidate size of the recording medium displayed on the display; and
receiving a selection of an arbitrary size of the recording medium by the user.

9. The method according to claim 7 or claim 8, further comprising:
accumulating use frequency of a size of the recording medium selected by the user;
determining a priority level of the at least one candidate size in accordance with the use frequency of size of the recording medium selected by the user; and
displaying the at least one candidate size on the display (12) with an indication of the priority level.

10. The method according to claim 9, further comprising:
receive another priority level set by the user for a size of the recording medium; and
determining the priority level of the at least one candidate size based on the another priority level set by the user instead of applying the priority level corresponding to the use frequency of the size of the recording medium.

11. The method according to any one of claims 7 to 10, further comprising:
receiving an input of user information;
retaining a list of candidate size of the recording medium corresponding to each user; and
referring to the list of candidate size of the recording medium corresponding to the received user information to display the at least one candidate size included in the list on the display (12).

12. The method according to any one of claims 7 to 11,
wherein the priority setting information includes information on a region where the recording medium feed apparatus (1) is used.

13. A carrier means carrying computer readable code for controlling a computer system to carry out the method of any one of claims 7 to 12.
